(19) Europäisches Patentamt / European Patent Office / Office européen des brevets

(11) **EP 1 137 016 B1**

(12) **EUROPEAN PATENT SPECIFICATION**

(45) Date of publication and mention
of the grant of the patent:
**02.10.2013 Bulletin 2013/40**

(51) Int Cl.:
***H01C 7/04*** *(2006.01)*

(21) Application number: **00956821.3**

(86) International application number:
**PCT/JP2000/005892**

(22) Date of filing: **30.08.2000**

(87) International publication number:
**WO 2001/016966 (08.03.2001 Gazette 2001/10)**

(54) **THERMISTOR DEVICE**

THERMISTOR

DISPOSITIF A THERMISTANCE

(84) Designated Contracting States:
**DE FR**

(30) Priority: **30.08.1999 JP 24294699**

(43) Date of publication of application:
**26.09.2001 Bulletin 2001/39**

(73) Proprietor: **DENSO CORPORATION
Kariya-city,
Aichi-pref. 448-8661 (JP)**

(72) Inventors:
• **KUZUOKA, Kaoru,
c/o Denso Corporation
Kariya-shi, Aichi 448-8661 (JP)**

• **OGATA, Itsuhei,
c/o Nippon Soken Inc
Nishio-shi, Aichi 445-8502 (JP)**
• **MAKINO, Daisuke,
c/o Nippon Soken Inc.
Nishio-shi, Aichi 445-8502 (JP)**

(74) Representative: **TBK
Bavariaring 4-6
80336 München (DE)**

(56) References cited:
**EP-A- 0 655 752    EP-A- 0 798 275
EP-A2- 0 866 472    JP-A- 8 167 502
JP-A- 10 012 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a thermistor element, to a method of producing the same and, in particular, to a wide-range-type thermistor element which can detect a temperature ranging from room temperature to a high temperature of about 1000°C, the thermistor element being particularly suitable for use in a temperature sensor.

Background Art

A temperature sensor using a thermistor element is used extensively. A thermistor element has characteristics in that its resistivity varies with temperature, and the characteristics are indicated by the resistivity and resistivity temperature coefficient (temperature dependence of the resistivity). When it is used as a temperature sensor, it is desired that the resistivity of the thermistor element is within a practical resistivity range of a temperature detecting circuit constituting the temperature sensor. Therefore, it is desired that the resistivity of a thermistor element is usually within a range of $100\Omega$ to $100k\Omega$ at the working temperature. Further, in case of affording a heat history to a thermistor element, it is required that it has small change between the resistivity after a heat history and the initial resistivity.

The resistivity characteristics of a thermistor element differ among elements constituting materials, therefore various materials with resistivity characteristics suitable for various purposes have been suggested. For example, perovskite materials, for example, those described in Japanese Unexamined Patent Publication No. 7- 201528, are mainly used in a thermistor element for detecting a high temperature of about 1000°C, such as temperature of an automobile exhaust gas, gas flame temperature of gas hot- water supply device, and temperature of a heating oven, etc. Perovskite materials consist of a complex oxide of a perovskite structure which is generally shown as $(MM')O_3$. The above-mentioned Publication discloses that ceramic compositions for thermistor elements are produced by mixing oxides of Y, Sr, Cr, Fe, Ti, etc. in a predetermined composition proportion and calcining the mixture to form a perfect solid solution in order to realize a thermistor which can be used in a high temperature range and demonstrates stable properties.

A need now exists for the development of a thermistor element which can detect a temperature ranging from room temperature to a high temperature of about 1000°C, i.e. so-called wide-range-type thermistor element. However, conventional thermistor elements described in the above-mentioned Publication are suitable for detecting a temperature ranging from moderate to high temperature (e.g. 400 to 1300°C, etc.), but there is a problem at a temperature ranging from a low to a moderate temperature (e.g. room temperature to 400°C, etc.) in that they cannot detect a temperature because the resistivity becomes too high to discriminate it from insulation. On the other hand, it is possible to adjust the resistivity properties by changing a composition or substitution proportion of complex perovskite oxides, but it has been found that these thermistor elements, which become to have a lower resistivity in order to be able to detect such a temperature, have too low resistivity in a range of a high temperature to satisfy the requirements of desired range of a resistivity ($100\Omega$ to $100k\Omega$), or that their resistivity changes by 10 to 30% after a heat history so that the stability is poor.

Thus, there is a need for development of a thermistor element which can detect a temperature ranging from room temperature to a high temperature of about 1000°C, having a small change in resistivity after a heat history. In addition, it is desirable that such a element has a high heat- resistance and a small change in resistivity even if the temperature is elevated up to about 1400- 1500°C, in order to be durable in conditions which are often exposed to high temperatures of about 1000°C. In addition, it is preferable that the sintering temperature is lower so as to not to damage lead wire materials which are sintered together with a thermistor element, thus there has been a need for a thermistor element which can be easily sintered at lower than 1600°C. EP 0798275 A and EP 0655 752 A disclose further thermistors.

Disclosure of Invention

Therefore, a first object of the present invention is to provide so called a wide- range- type thermistor element which can satisfy two resistivity characteristics, i.e. has low resistivity characteristics of $100\Omega$- $100k\Omega$ within a temperature range from room temperature to 1000°C and also has stable characteristics (small change in resistivity in the heat history) .

In addition, a second object of the present invention is to provide a thermistor element which has high heat-resistance and a small change in resistivity at a high temperature of about 1400-1500°C and which can be easily sintered at temperature lower than 1600°C.

The thermistor element described in claim 1, which defines the present invention is characterized in that the thermistor element comprise a mixed sintered body $(MM')O_3 \cdot AO_x$ obtainable by mixing and sintering a complex perovskite oxide $(MM')O_3$ and a metallic oxide $AO_x$,

wherein, when a is a molar fraction of said complex perovskite oxide $(MM')O_3$ of a mixed sintered body and b is a molar fraction of said metallic oxide $AO_x$, a and b satisfy the relations $0 \leq a < 1.0$, $0.05 < b \leq 0.95$ and $a + b = 1$,

wherein said M in said complex perovskite oxide $(MM')O_3$ is at least one element selected from Mg, Ca, Sr, Ba, Y, Ce, Pr, Nd, Sm, Eu, Gd, Tb, Dy, Ho, Yb and Sc, and M' is at least one element selected from Al, Ga, Ti, Zr, Hf, V, Nb, Ta, Cr, Mo, W, Mn, Tc, Re, Fe, Co, Ni, Ru, Rh, Pd, Os, Ir and Pt,
and wherein a metal A in said metallic oxide AOx is at least one element selected from B, Mg, Sc, Cr, Mn, Fe, Ni, Zn, Ga, Ge, Sr, Zr, Nb, Sn, Ce, Pr, Nd, Sm, Eu, Gd, Tb, Dy, Ho, Er, Tm, Yb, Lu, Hf and Ta.

The present invention is further defined by claim 6, which is directed to a temperature sensor, and by claims 7 - 9 which are directed to a method for producing a thermistor element.

A conventional thermistor element composed of a perfect solid solution having a perovskite type structure cannot satisfy two characteristics, i.e. resitivity characteristics within a range from room temperature to 1000°C and a resistive stability after a heat history, at the same time.

Thus, in the present invention a novel thermistor element having the above two characteristics is accomplished by using a mixed sintered body prepared by mixing said complex perovskite oxide (MM') $O_3$ having a comparatively low resistivity with said metallic oxide $AO_x$ having high resistivity and high heat resistance.

Namely, said metallic oxide $AO_x$ can make said complex perovskite oxide (MM') $O_3$ to have a high resistivity in a range of high temperature because said metallic oxide has a high resistivity. Furthermore, said metallic oxide can enhance the stability of a thermistor element in high temperature since it has a high melting point and outstanding heat resistance.

Therefore, the present invention provides a wide- range- type thermistor element, having resistive stability, which has a resistivity of 100Ω- 100kΩ within a temperature range from room temperature to 1000°C and a small change in resistivity after a heat history, so that it is preferably used in a temperature sensor, etc. to provide good performance within a wide temperature range.

As described in claim 2, specified examples of said metallic oxide $AO_x$ contain at least one metallic oxide selected from MgO, $Sc_2O_3$, $Cr_2O_3$, MnO, $Mn_2O_3$, $Fe_2O_3$, $Fe_3O_4$, NiO, ZnO, $Ga_2O_3$, $ZrO_2$, $Nb_2O_s$, $SnO_2$, $CeO_2$, $Pr_2O_3$, $Nd_2O_3$, $Sm_2O_3$, $Eu_2O_3$, $Gd_2O_3$, $Tb_2O_3$, $Dy_2O_3$, $HO_2O_3$, $Er_2O_3$, $Tm_2O_3$, $Yb_2O_3$, $Lu_2O_3$, $HfO_2$, $Ta_2O_5$ and $MgCr_2O_4$. These metallic oxides demonstrate a high resistivity and a high heat-resistance and contribute to an improved performance of a thermistor element.

As described in claim 3, said metallic oxide $AO_x$ contains at least one metallic oxide selected from MgO, $Sc_2O_3$, $ZrO_2$, $Lu_2O_3$, $HfO_2$, $Cr_2O_3$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, $CeO_2$ and $MgCr_2O_4$, having more effects on heat-resistance to be completely durable at high temperature of about 1400-1500°C.

As described in claim 4, said metallic oxide $AO_x$ contains at least one metallic oxide selected from MnO, $Mn_2O_3$, $Fe_2O_3$, $Fe_3O_4$, NiO, ZnO, $Ga_2O_3$, $Nb_2O_5$, $SnO_2$, $Ta_2O_5$, having an enhanced sinterbility which permits said oxide to be sintered at lower temperature than 1600°C.

As described in claim 5, at least one of CaO, $CaCO_3$, $SiO_2$ and $CaSiO_3$ may be added to said mixed sintered body as a sintering aid. Said sintering aid gives said mixed sintered body an enhanced density and improved characteristics.

The invention described in claim 6 provides a temperature sensor comprising a thermistor element according to any one of claims 1-5. Such a thermistor element can detect temperature over a wide range and has stable characteristics to provide a temperature sensor having a good performance and high durability.

The invention described in claim 7 relates to a method of producing the thermistor element, according to any one of claims 1-5, which comprises mixing said complex perovskite oxide (MM')$O_3$ with said metallic oxide $AO_x$; grinding the mixture to adjust an average particle diameter of the mixture after grinding to an average particle diameter which is not more than that of said metallic oxide before grinding; molding the mixture into an article having a predetermined shape; and sintering the article. The thermistor element was incorporated into a temperature sensor and the resistivity characteristics of the sensor were examined. As a result, it has been found that a detected temperature accuracy varies with the sensor in the level within the range from ±20 to 30°C in the temperature range from room temperature to 1000°C.

Hence, various conditions in the production step of the thermistor element were examined. As a result, it was found that the scatter in temperature accuracy arises as follows. That is, since an average diameter of said complex perovskite oxide (MM') $O_3$ (or (MM') $O_3 \cdot AO_x$) obtained by the calcination is larger than that of said metallic oxide, both components are not uniformly mixed to cause a scatter in the composition of a mixed sintered body, which results in a scatter in resistivity of a thermistor element.

It has been found that, using the method of claim 7, both components may be mixed and ground by atomization to adjust an average particle diameter of this mixture to an average particle diameter which is not more than that of said metallic oxide $AO_x$. That is, when using this production method, a variation in composition of the mixed sintered body is reduced and scatter in resistivity of a thermistor element can be reduced.

Accordingly, it is possible to provide a wide- range- type thermistor element which can realize a small scatter in temperature accuracy.

In a method of claim 8, a method of producing a thermistor element comprises mixing a raw material of said M with a raw material of said M' in said complex perovskite oxide (MM')$O_3$; grinding the mixture to adjust an average particle diameter of the mixture after grinding to an average particle diameter which is not more than that of the raw material of said M before mixing and is not more than 0.5$\mu$m; calcining the ground mixture to obtain said complex perovskite oxide (MM')$O_3$; mixing said (MM')$O_3$ with said metallic oxide $AO_x$; molding the mixture into an article having a predetermined shape; and sintering the article.

Further, it has been found that said temperature accuracy is also affected by the scatter in the calcined body itself of said complex perovskite oxide (MM') $O_3$ (or (MM') $O_3.AO_x$) ) . Therefore, it has been found that the scatter in resistivity of a thermistor element can be  also reduced by mixing the raw material of M and the raw material M', and grinding by atomization, to adjust an average particle diameter to not more than a predetermined level, in a step of preparing a calcined body.

Accordingly, it is possible to provide a wide- range- type thermistor element which can realize small scatter in temperature accuracy when using this production method.

In a method of claim 9, a method of producing a thermistor element comprises mixing a raw material of said M with a raw material of said M' in said complex perovskite oxide (MM')$O_3$; grinding the mixture to adjust an average particle diameter of the mixture after grinding to an average particle diameter which is not more than that of the raw material of said M before mixing and is not more than 0.5$\mu$m; calcining the ground mixture to obtain said complex perovskite oxide (MM')$O_3$; mixing said (MM')$O_3$ with said metallic oxide $AO_x$; grinding the mixture to adjust an average particle diameter of the mixture after grinding to an average particle diameter which is not more than that of said metallic oxide $AO_x$ before mixing; molding the mixture into an article having a predetermined shape; and sintering the article. This method is a combination of methods of claims 7 and 8. By this combination of each effect of both methods, it is possible to provide a wide-range-type thermistor element which realizes a reduced temperature accuracy.

The present invention is described, in more detail, as follows.

A thermistor element of the present invention is composed of a mixed sintered body obtained by mixing a complex perovskite oxide (MM') $O_3$ with a metallic oxide $AO_x$ and then sintering the mixture, represented by a chemical formula (1)

$$a \, (MM') \, O_3 \cdot bAO_x \qquad (1)$$

wherein a is a molar fraction of (MM') $O_3$ and b is a molar  fraction of $AO_x$.

(MM') $O_3$, which constitutes a thermistor element of the present invention, is a complex perovskite oxide wherein M is at least one element selected from the elements of the groups 2A and 3A excluding La in the Periodic Table, and M' is at least one element selected from the elements of the groups consisting 3B, 4A, 5A, 6A, 7 and 8 in the Periodic Table. Since La has high moisture absorption property, there is a problem that La reacts with water in the air to form an unstable hydroxide, which results in the breakage of a thermistor element. Therefore, La is not used as M.

Concretely, the element M contains, for example, Mg, Ca, Sr and Ba of the group 2A; and Y, Ce, Pr, Nd, Sm, Eu, Gd, Tb, Dy, Ho, Yb and Sc of the group 3A. Further, M' preferably contains, for example, Al and Ga of the group 3B; Ti, Zr and Hf of the group 4A; V, Nb and Ta of the group 5A; Cr, Mo and W of the group 6A; Mn, Tc and Re of the group 7A; and Fe, Co, Ni, Ru, Rh, Pd, Os, Ir and Pt of the group 8.

The combination of M and M' can be optionally selected to provide the desired resistivity characteristics. A complex perovskite oxide (MM') $O_3$ which M and M' are adequately selected demonstrates low resistivity and low resistivity temperature coefficient (e.g. 1000- 4000 (k) ) . Such a complex perovskite oxide (MM') $O_3$ preferably contains, for example, Y (Cr, Mn) $O_3$, etc. when plural elements are selected as M or M', the molar ratio of each element can be optionally selected based on desired resistivity characteristics.

However, when a complex perovskite oxide (MM') $O_3$ is used alone as a thermistor element, resistive stability is incomplete and apt to decrease, in resistivity, within a high temperature range. Therefore, according to the present invention, a metallic oxide can be used to stabilize the resistivity of a thermistor element and maintain it within desired range.

Accordingly, a metallic oxide $AO_x$ is required to have the characteristics as follows.

① high resistivity within a high temperature range, and
② high heat-resistance and a resistive stability within a high temperature range.

Concretely, it is desired that regarding ①, a resistivity of a thermistor element made of $AO_x$ itself (not containing complex perovskite oxide) is not less than 1000Q at 1000°C, when the element has a size and a shape which is usually used for a sensor, and that regarding said ②, $AO_x$ has a melting point not less than 1300°C which is higher than the maximum temperature of common use of a sensor.

In order to satisfy said characteristics ① and ②, a metal A in a metallic oxide $AO_x$ is preferably at least one element selected from B, Mg, Sc, Cr, Mn, Fe, Ni, Zn, Ga, Ge, Sr, Zr, Nb, Sn, Ce, Pr, Nd, Sm, Eu, Gd, Tb, Dy, Ho, Er, Tm, Yb, Lu, Hf, and Ta. Concretely, a metallic oxide $AO_x$ is preferably at least one element selected from MgO, $Sc_2O_3$,

$Cr_2O_3$, MnO, $Mn_2O_3$, $Fe_2O_3$, $Fe_3O_4$, NiO, ZnO, $Ga_2O_3$, $ZrO_2$, $Nb_2O_5$, $SnO_2$, $CeO_2$, $Pr_2O_3$, $Nd_2O_3$, $Sm_2O_3$, $Eu_2O_3$, $Gd_2O_3$, $Tb_2O_3$, $Dy_2O_2$, $Ho_2O_3$, $Er_2O_3$, $Tm_2O_3$, $Yb_2O_3$, $Lu_2O_3$, $HfO_2$ and $Ta_2O_5$.

Alternatively, a metallic oxide $AO_x$ can be a complex metallic oxide containing at least Mg. Specified examples contain $MgCr_2O_4$, etc. and at least one complex metallic oxide selected from these ones can be used to satisfy characteristics ① and ②.

These metallic oxides can be classified into two groups in view of the melting point. Group 1 is a group of a metallic oxide of a melting point not less than 2000°C, having an effect on great enhancement of heat resistance of a thermistor element besides the above mentioned effects (desired resistivity characteristics and resistivity stability).

Metal oxides $AO_x$ belonging to this group 1 include MgO, $SC_2O_3$, $ZrO_2$, $Lu_2O_3$, $HfO_2$, $Cr_2O_3$, $Pr_2O_3$, $Nd_2O_3$, -$Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, $CeO_2$ and $MgCr_2O_4$.

A thermistor element mixed with such a metal oxide demonstrates little change in resistivity even when the temperature is elevated up to about 1400-1500°C. Among them, MgO, $Sc_2O_3$, $ZrO_2$, $Lu_2O_3$ and $HfO_2$, in particular, have a high melting point of not less then 2400°c and have more effect on the heat resistance of a thermistor and thus they are useful in the environment usually exposed to a high temperature of about 1000°C.

Group 2 is a group of metallic oxides with a melting point less than 2000°C, having an effect of enhancing sinterability of a thermistor element besides the above mentioned effects (desired resistivity characteristics and resistive stability).

Metal oxides $AO_x$ belonging to this group 2 include MnO, $Mn_2O_3$, $Fe_2O_3$, $Fe_3O_4$, NiO, ZnO, $Ga_2O_3$, $Nb_2O_5$, $SnO_2$, $Ta_2O_5$.

A thermistor element containing such a metal oxide may be sintered at a temperature of less than 1600°C so that it results in the advantage of a decrease in lead wire damage by sintering.

In addition, manufacturing costs can be reduced due to the decrease in the sintering temperature.

In a mixed sintered body represented in the above mentioned formula (1), a is a molar fraction of complex oxide (MM')$O_3$ and b is a molar fraction of a metallic oxide $AO_x$. In the present invention, it is preferable that these a and b satisfy the relations $0.005 \leqq a < 1.0$, $0.05 < b \leqq 0.95$ and $a+b=1$. A desired low resistivity and low resitivity temperature coefficient can be accomplished by optional selection of a and b within said range. Thus, these resistivity characteristics can be controlled over a wide range since a and b can be selected widely.

Furthermore, this mixed sintered body can contain at least one of CaO, $CaCO_3$, $SiO_2$ and $CaSiO_3$ as a sintering aid. Such a sintering aid forms liquid phase at a temperature at which a mixture composed of said complex oxide (MM')$O_3$ and said metallic oxide $AO_x$ is sintered, and thus the sintering is effectively promoted.

Accordingly, the sintering density of the resulting mixed sintered body is improved to result in a resistivity stability of a thermistor element, as well as a reduced scatter in resistivity with a variation in sintering temperature. An amount of the sintering aid added is optionally adjusted depending on a type of said aid.

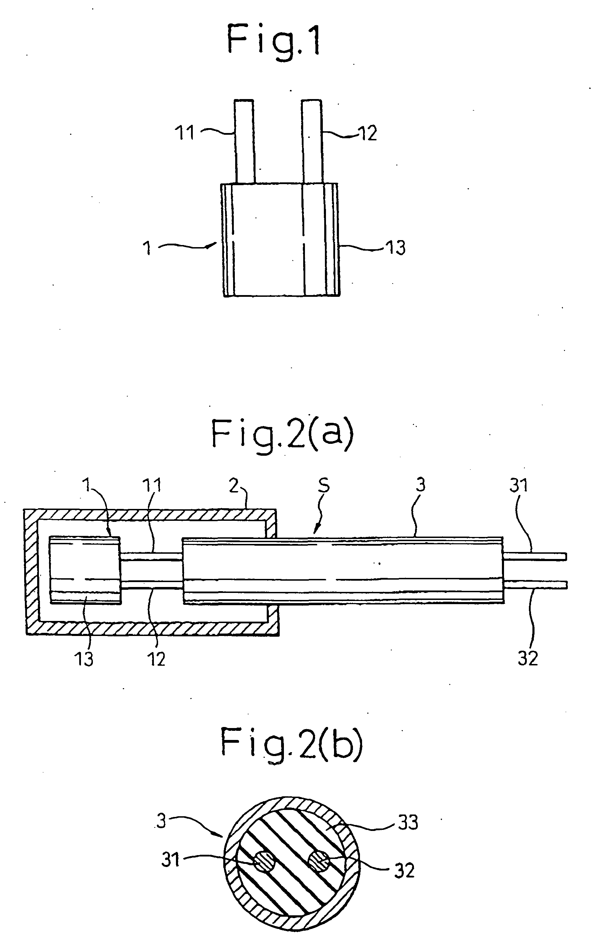

A thermistor element 1 composed of a mixed sintered body and a temperature S comprising said element is shown in Fig.1. As shown in Fig.1, in a thermistor element 1, the respective ends of two parallel lead wires 11, 12 are embedded in an element portion 13 into which said mixed sintered body is formed. For example, the cylindrical element portion 13 has an outer diameter of 1.60 mm. Said thermistor element 1 is incorporated into a typical temperature assay system to give a temperature sensor S. The temperature sensor S has a cylindrical heat-resistant metal case 2 and the thermistor element 1 is disposed in a left part as shown in Fig. 2(a). An end of a metal pipe 3 which passes through the metal case 2 is disposed in a right part of the metal case 2. As shown in Fig. 2(b), the metal pipe 3 has lead wires 31, 32 in it and these lead wires 31, 32, which pass through the metal pipe 3, are respectively connected to lead wires 11, 12 of the thermistor element 1(Fig. 2(a)). Lead wires 11, 12 have, for example, a diameter of 0.3mm and a length of 10.5mm and are composed of Pt100 (pure platinum). The metal pipe 3 is filled with magnesia powder 33 to secure the insulation properties of lead wires 31, 32 in the metal pipe 3.

The wire diameter and length, etc. of the lead wire 11, 12 can be optionally selected according to the shape, dimension and service environmental conditions of the temperature sensor. The material of lead wires are not limited to Pt100 (pure platinum), there can also be used a high-melting temperature metal having a melting point high enough to endure the sintering temperature of a thermistor element and providing satisfactory electrical conductivity such as a lead wire, e.g. Pt80Ir20 (platinum 80%, iridium 20%), etc.

For the purpose of preventing the lead wires from breaking, the section can take any shape other than circular shape, e.g. rectangular shape, semi-circular shape, etc. It is also possible to use lead wires of the thermistor element after providing irregularities on lead wires surface by knurling.

Methods (1), (2) and (3) of producing said thermistor element are subsequently described. The production methods (2) and (3) are partially different from the fundamental method (1) . In any one method, the production step is roughly divided into a first preparation step of obtaining a calcined body of (MM') $O_3$ or (MM') $O_3 \cdot AO_x$ by calcination and a second preparation step of compounding the resulting calcined body and $AO_x$ to form a mixed sintered body of a predetermined shape, to thereby obtain a thermistor element.

In said fundamental method (1), a powdered oxide of these elements ($MO_x$, $M'O_x$), etc. as the raw materials of M and M', is first prepared, and then compounded so that desired composition is obtained (compounding (1) step) . Subsequently, water, etc. is added to the compound, mixed by a ball mill, etc. (mixing step), dried by hot- air, and roughly ground by a chaser mill to obtain a mixed powder. This mixed powder is calcined to obtain a calcined body $(MM')$ $O_3$ (calcination step) . A calcination temperature ranges usually from about 1000 to 1500°C. In order to obtain more uniform composition, a binder may be added in the mixing step, and the resulting mixture is granulated and dried by using a spray dryer and then the resulting mixed powder may be calcined. The calcination may be carried out twice or more.

Further, a compound other than an oxide may be used as a raw material of M or M'.

In the second preparation step, the resulting calcined body is compounded with $AO_x$ at molar fractions a and b so that the desired resistivity and resistivity temperature coefficient are obtained (compounding (2) step), mixed and ground by adding water and binder, etc. (mixing and grinding step) . The resulting mixed powder is granulated and dried by using a spray drier, etc. (granulation/ drying step), molded into an article having a predetermined shape incorporating a lead wire of Pt, etc. in a mold (molding step), and sintered (sintering step) to obtain a thermistor element composed of a mixed sintered body $(MM')$ $O_3 \cdot AO_x$. The sintering temperature is usually within a range from about 1200 to 1700°C and is optionally selected to obtain the best stability of the thermistor properties.

In the molding step, molding may be performed after inserting lead wires. It is also possible to form lead wires by molding, making a hole for providing the lead wire, inserting lead wires, followed by sintering, thereby making it possible to obtain a thermistor element. It is also possible to obtain a thermistor element by forming lead wires after sintering the molded article. Alternatively, it is also possible to obtain a thermistor element provided with lead wires by adding a binder, a resin material, etc. to raw materials of the thermistor element, mixing them, adjusting the viscosity and hardness of the mixture to those suitable for extrusion molding to obtain a molded thermistor having a hole for providing lead wires, inserting lead wires, followed by sintering, thereby making it possible to obtain a thermistor having lead wires.

The thermistor element thus obtained constitutes a mixed sintered body prepared by uniformly mixing $(MM')$ $O_3$ as a perovskite compound with metallic oxide $AO_x$ via grain boundaries. This thermistor element demonstrates a low resistivity of $100\Omega$ to $100k\Omega$ necessary for use in a temperature sensor within a range from room temperature (e.g.27°C) to 1000°C. Further, since a resistivity temperature co-efficient $\beta$ can be controlled to 2000-4000k, scatter in resistivity with a variation in temperature can be reduced. In addition, a change in resistivity $\Delta R$ in heat history from room temperature to 1000°C can realize a level of about few %. Therefore, it is possible to provide a wide-range-type thermistor element which can detect a temperature ranging from room temperature to 1000°C and has stable characteristics, that is, a change in resistivity is small in the heat history. Furthermore, a high heat-resistance against a high temperature of 1400-1500°C may be provided when a metallic oxide of the group 1 is selected.

On the other hand, sinterability is improved to make it possible to sinter said element at a temperature lower than 1600°C when a metallic oxide of the group 2 is selected. When a compound containing M contains an element A in a mixed sintered body $(MM')$ $O_3 \cdot AO_x$, a calcined body $(MM')$ $O_3 \cdot AO_x$ can be obtained in the first preparation step by adding excess $AO_x$ which is an oxide of M in a compounding step to compound a raw material powder of M and M', mixing and calcining. In this case, in the subsequent second preparation step, a mixed sintered body may be obtained by optionally mixing $AO_x$, etc. with said calcined body to obtain desired molar ratio (a: b), granulating, molding, and then sintering.

The production method (2) is one in which the fundamental method (1) is partially altered. That is, in the above second preparation step, the average particle diameter of the resulting mixture is adjusted to an average particle diameter which is not more than that of $AO_x$ before mixing in the step of mixing and grinding a calcined body and $AO_x$. As a grinding means for reducing the average particle diameter, a medium stirring mill can be used. As a grinding means, a ball (about 1mm$\phi$) made of $ZrO_2$ can be used. Then, a thermistor element is obtained by granulating and drying, molding and sintering in the same manner as mentioned before.

Based on resistivity-temperature data of a lot of temperature sensors produced by said method (1), the temperature accuracy is evaluated.

As a result, it has been found that temperature accuracy ($\pm$A°C) is $\pm$20-30°C. On the other hand, the thermistor material was observed by SEM, EPMA, etc. As a result, it has been found that an average particle diameter (e.g.2 to 5$\mu$m in case of $(MM')O_3$) of $AO_x$ obtained after calcination in the first preparation step is larger than an average particle diameter (e.g.1.0$\mu$m or less in case of $Dy_2O_3$) of $AO_x$ to be mixed with and, therefore, both components are not uniformly mixed to cause a scatter in composition distribution of the mixed sintered body.

Therefore, a mixture of a calcined body and $AO_x$, etc. is atomized in a mixing and grinding step as in said method (2) . Consequently, each component can be uniformly mixed to reduce a variation in composition of the mixed sintered body. This results in a reduced scatter in the resistivity of the thermistor element. According to this method, temperature accuracy ($\pm$A°C) can be reduced to $\pm$10°C or less. Accordingly, it is possible to provide a wide- range-type thermistor element, with high reliability, which can realize a sensor temperature accuracy better than a conventional level within a temperature range from room temperature to 1000°C (a small scatter in temperature accuracy between sensors) in addition to effects due to the above- mentioned method (1) . Furthermore, according to the said method (3), in said first preparation step, a raw material of M may be mixed and ground with a raw material of M' to adjust an average particle diameter of this mixture to an average particle diameter which is not more than that of the raw material of M before mixing and is not more than $0.5\mu m$ in the step of mixing and grinding an oxide of M' and an oxide of M. As a grinding means for reducing the average particle diameter, a medium stirring mill can be used in the same manner as in the method (2) . Thereafter, the mixed grind may be calcined and subjected to the second preparation step to obtain a thermistor element.

In this method, since uniform mixing of each component is realized by uniform atomization of the raw materials of M and M', a reduction in variation in a calcined body and inhibition of the existence of the unreacted raw material can be realized and scatter in the resistivity of the thermistor element can be reduced. Accordingly, according to this method, it is possible to provide a wide- range- type thermistor element with good sensor temperature accuracy (a small scatter in temperature accuracy between sensors) in addition to effects of the above mentioned method (1) .

In the production method (3), the mixing and grinding step of the second preparation step may be carried out by using a common ball mill, etc. as in the production method(1), but may also be performed by using a medium stirring mill, as in the production method (2). Thereby, uniform mixing of a calcined body and $AO_x$, etc. is performed in the molding and sintering steps as the step after the mixing and grinding step. Accordingly, in addition to the above-described effect, the effect of the production method (2) that a uniform mixing of a calcined body and $AO_x$, etc. can be provided. Therefore, scatter in the resistivity of a thermistor element can be further reduced.

A temperature sensors using thermistor elements of the above-described production method (2) and (3) of the present invention are suitable for use in map control devices to which high temperature accuracy is required, e.g. a temperature monitor for an oxygen sensor for automobile exhaust gas, etc. because the temperature accuracy is controlled within $\pm 10°C$ or less.

Brief Description of Drawings

FIG. 1 is a schematic representation illustrating a thermistor element of the present invention.

FIG. 2 (a) is a schematic representation illustrating a temperature sensor using a thermistor element of the present invention.

FIG. 2 (b) is a schematic sectional view illustrating a temperature sensor using a thermistor element of the present invention.

FIG. 3 is a flow chart illustrating a production step of a thermistor element of Example 1 (according to the production method (1)) of the present invention.

FIG. 4 is a flow chart illustrating a production step of a thermistor element of Example 2 (according to the production method (2)) of the present invention.

FIG. 5 is a flow chart illustrating a production step of a thermistor element of Example 3 (according to a combination of the production method (2) and the method (3)) of the present invention.

FIG. 6 is a flow chart illustrating a production step of a thermistor element of Example 4 (according to the production method (3)) of the present invention.

FIG. 7 is a flow chart illustrating a production step of a thermistor element of Example 5 (according to the production method (3)) of the present invention.

Best Mode for Carrying Out the Invention

Example 1

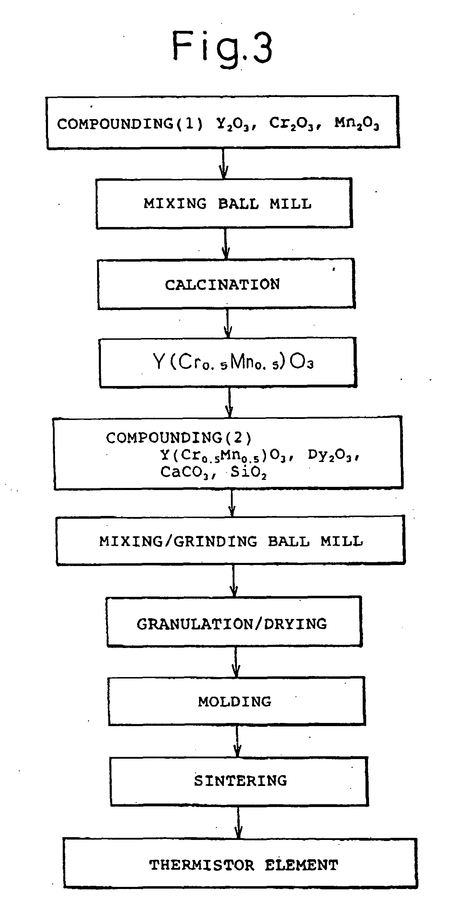

According to a flow chart of FIG. 3 illustrating a  production step, a mixed sintered body of aY $(Cr_{0.5}Mn_{0.5})$ $O_3 \cdot bDy_2O_3$, was obtained from Y $(Cr_{0.5}Mn_{0.5})$ $O_3$, wherein Y was selected as M and Cr and Mn were selected as M' in $(MM')$ $O_3$, and $Dy_2O_3$ as $AO_x$. As shown in Table 1, a molar ratio (a : b, a and b are molar fractions) of Y $(Cr_{0.5}Mn_{0.5})$ $O_3$ : $Dy_2O_3$ was 36 : 64 (Example 1) . Further, thermistor elements with molar ratios (a : b) of 95 : 5 and 5 : 95 were obtained (Examples 1A and 1B) .

This production step corresponds to the above- described production method (1), and is divided into a first preparation step to obtain a calcined body Y $(Cr_{0.5}Mn_{0.5})$ $O_3$, and a second preparation step to obtain a thermistor element from the resulting calcined body and $Dy_2O_3$.

In the first preparation step, $Y_2O_3$, $Cr_2O_3$ and $Mn_2O_3$ (purity of all components is not less than 99.9%) were first prepared as starting materials and then weighed so that a molar ratio Y : Cr : Mn becomes 2 : 1 : 1 to make 500g as the total amount (compounding (1) step). An average particle diameter of $Y_2O_3$, $Cr_2O_3$ and $Mn_2O_3$ was $1.0\mu m$, $2.0\text{-}4.0\mu m$ and $7.0\text{-}15.0\mu m$, respectively. Subsequently, using a resin pot (volume : 5 liter) containing $Al_2O_3$ or $ZrO_2$

pebbles ($\phi$15mm : 2.5kg, $\phi$20mm : 2.5kg) as a ball mill, these weighed substances and 1500cc of purified water were charged in the pot. The mixture was mixed at 60rpm for 6 to 12 hours (mixing step). A mixed slurry after mixing was evaluated by using a laser type granulometer. As a result, an average particle diameter was 1.7$\mu$m as shown in Table 2.

A resulting mixed slurry containing $Y_2O_3$, $Cr_2O_3$ and $Mn_2O_3$ was transferred to a porcelain evaporating dish, and then dried by using a hot- air dryer at 150°C for 12 hours or more to obtain a mixed solid. Subsequently, said mixed solid was roughly ground by using a chaser mill and passed through a sieve (#30 mesh) to obtain a mixed powder of $Y_2O_3$, $Cr_2O_3$, and $Mn_2O_3$. This mixed power was charged in a crucible made of 99.3% $Al_2O_3$ and then  calcined in a high- temperature oven in the air at 1100 to 1300°C for 1 to 2 hours (calcination step) . A calcined body of Y $(Cr_{0.5}Mn_{0.5})$ $O_2$ as a bulk solid was obtained and roughly ground by using a chaser mill and passed through a sieve (#30 mesh) to obtain a powder.

In the second preparation step, Y $(Cr_{0.5}Mn_{0.5})$ $O_3$ which was obtained in the above- described first preparation step, and commercially available $Dy_2O_3$ (purity : 99.9% or more, an average particle diameter : 1.0$\mu$m) were weighed so that a compounding molar ratio became to be a predetermined one as shown in Table 1, to make 500g as the total amount.

When the molar fraction of Y $(Cr_{0.5}Mn_{0.5})$ $O_3$ and that of $Dy_2O_3$ are a and b (a+b=1), respectively, a molar ratio=a : b, and, therefore, a=0.36 and b=0.64 in Example 1.

In case of the sintering, $SiO_2$ and $CaCO_3$, which are converted into a liquid phase within the range from 1500 to 1650°C, are used as a sintering aid and SiO2 and CaCO3 are added in an amount of 3wt% and 4.5wt%, respectively, based on the total amount (500g) of the above Y $(Cr_{0.5}Mn_{0.5})$ $O_3$ and $Dy_2O_3$ (compounding (2) step) .

Subsequently, the above Y $(Cr_{0.5}Mn_{0.5})$ $O_3$, $Dy_2O_3$, $SiO_2$ and $CaCO_3$ were charged in a resin pot (volume: 5liter) containing a ball mill same as described in the first preparation step. After adding 1500cc of purified water and polyvinyl alcohol (PVA) as a binder, the mixture was mixed and ground at 60rpm for 4 or more hours (mixing/ grinding step) . Polyvinyl alcohol (PVA) as a binder was added in an amount of 1g per 100g of a mixed powder of Y $(Cr_{0.5}Mn_{0.5})$ $O_3$ and $Dy_2O_3$. A resulting mixed ground slurry was evaluated by using a laser type granulometer. As a result, an average particle diameter was 2.5$\mu$m as shown in Table 2.

This mixed ground slurry was granulated and dried by using a spray dryer to obtain a mixed powder of Y $(Cr_{0.5}Mn_{0.5})$ $O_3$ and $Dy_2O_3$ (granulation/ drying step) .

A thermistor element having the same shape as shown in FIG. 1 was produced by using this mixed powder as a thermistor raw material.

Using a lead wire (material : Pt100 (pure platinum) ) having a size of 0.3mm$\phi$ in outer diameter$\times$10.5mm in length, the lead wire was inserted and a thermistor raw material was molded in a mold having an outer diameter of 1.74$\phi$ under a pressure of about 1000kg f/cm$^2$ to obtain a molded article of a thermistor element (provided with embedded lead wires) having an outer diameter of 1.75mm$\phi$ (molding step) .

The molded article for a element portion 13 of a thermistor element 1 was arranged on a corrugatsd setter made of $Al_2O_3$ and then sintered in the air at 1600°C for 1 to 2 hours to obtain a thermistor element 1 having an outer diameter of 1.60mm$\phi$ of a mixed sintered body aY $(Cr_{0.5}Mn_{0.5})$ $O_3 \cdot bDy_2O_3$ (sintering step) .

Each resulting thermistor element in Examples 1, 1A and 1B having a different compounding molar ratio (a : b), was respectively incorporated into a typical temperature sensor shown in Fig.2 to give a temperature sensor.

The temperature sensors made by incorporating the thermistor elements of Examples 1, 1A and 1B were put in a high-temperature oven and the temperature characteristics of the resistivity were evaluated within a range from room temperature (27°C) to 1000°C. The results are shown in Table 1.

A resistivity temperature coefficient $\beta$ is represented by the equation(2):

$$\beta(K)=ln\ (R/R_o)\ /\ (1/K-1/K_o)---(2)$$

In the equation, in represents a common logarithm, and R and Ro respectively represent a resistivity of the thermistor element at room temperature (300K) and that at 1000°C (1273K) in air. In addition, the change in resistivity $\Delta R$ represents a change in resistivity of the temperature sensor in a high-temperature durability test wherein each temperature sensor is allowed to stand in the air at 1100°C for 100 hours, and is represented by the equation (3):

$$\Delta R\ (\%)=(R'_t\ /\ R_t)\times100-100---(3)$$

In the equation, $R_t$ represents an initial resistivity at a predetermined temperature (e.g. 500°C), and $R'_t$ represents a resistivity at a predetermined temperature t after standing for 1000 hours.

As shown in Table 1, a resistivity is within a range of 110$\Omega$-100k$\Omega$ at a temperature ranging from room temperature to 1000°C, and a resistivity temperature coefficient β is within a desired range of 2200-2480K, In addition, it could be confirmed that a change in resistivity ΔR can stably realize a level of about few %. Threfore, it is possible to provide a thermistor element which can detect a wide temperature ranging from room temperature to 1000°C and stable characteristics, that is, a change in resistivity ΔR is small in the heat history from room temperature to 1000°C.

The temperature accuracy of the temperature sensor made by incorporating the thermistor element of Example 1 was examined. The results are shown in Table 2. The evaluation method was as follows. That is, a standard deviation $\sigma$(sigma) of the resistivity at a predetermined temperature (e.g. 500°C) is calculated from resistivity-temperature data of a lot of temperature sensors (e.g. 100 sensors). Using $6\sigma$ (standard deviation) as a scatter width (two sides), a value A obtained by dividing the value, calculated by this scatter width of the resistivity based on the temperature, by 2 is represented as "temperature accuracy $\pm$A°C". As a result, it has been found that the temperature accuracy was $\pm$23°C which is satisfactorily suitable for use.

Table 1

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $Y$ $(Cr_{0.5}Mn_{0.5})$ $O_3$ | $Dy_2O_3$ | ROOM TEMPERATURE (27°C) | 1000°C | | |
| 1, 2, 3, 4 | 36 | 64 | 50 | 0.14 | 2300 | -5.0 |
| 1A, 2A, 3A, 4A | 95 | 5 | 30 | 0.11 | 2200 | -5.0 |
| 1B, 2B, 3B, 4B | 5 | 95 | 100 | 0.18 | 2480 | -5.0 |

Table 2

| EXAMPLE | RAW MATERIAL COMPONENT IN CASE OF GRINDING | AVERAGE PARTICLE DIAMETER AFTER MIXING ($\mu$m) | AVERAGE PARTICLE DIAMETER AFTER GRINDING ($\mu$m) | TEMPERATURE ACCURACY (°C) |
|---|---|---|---|---|
| 1 | $Y(CrMn)O_3, Dy_2O_3$ | 1.7 | 2.5 | $\pm$23 |
| 2 | $Y(CrMn)O_3, Dy_2O_3$ | 1.7 | 0.4 | $\pm$10 |
| 3 | $Y(CrMn)O_3, Dy_2O_3$ | 0.3 | 0.3 | $\pm$5 |
| 4 | $Y(CrMn)O_3, Dy_2O_3$ | 0.3 | 1.6 | $\pm$9 |
| 5 | $Y(CrMn)O_3, Pr_2O_3$ | 0.3 | 0.3 | $\pm$5 ($\pm$24) |
| 6 | $Y(CrMn)O_3, Sm_2O_3$ | 0.3 | 0.3 | $\pm$5 ($\pm$23) |
| 7 | $Y(CrMn)O_3, Nd_2O_3$ | 0.3 | 0.3 | $\pm$5 ($\pm$24) |
| 8 | $Y(CrMn)O_3, MgO$ | 0.3 | 0.3 | $\pm$5 ($\pm$24) |
| 9* | $Y(CrMn)O_3, 3Al_2O_3 \cdot 2SiO_2$ | 0.3 | 0.3 | $\pm$5 ($\pm$25) |
| * Reference Example | | | | |

Example 2

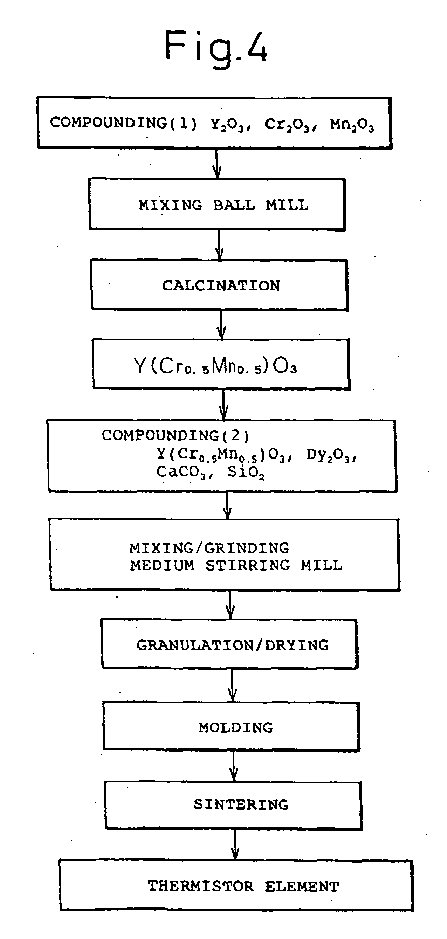

According to a production step shown in FIG. 4, a thermistor element composed of a mixed sintered body having the same composition of $aY (Cr_{0.5}Mn_{0.5}) O_3 \cdot bDy_2O_3$ as that of Example 1 was produced by another method. As shown in Table 1, a molar ratio (a : b) of $Y (Cr_{0.5}Mn_{0.5}) O_3$ and $Dy_2O_3$ was 36 : 64 (Example 2) . In the same manner, thermistor elements with molar ratios 95 : 5 and 5 : 95 were also produced (Examples 2A and 2B, respectively) . This production step corresponds to the above- described production method (2), and thus in a mixing/ grinding step of a second preparation step, a medium stirring mill was used instead of a ball mill in Example 1. In the first preparation step, a mixed slurry was obtained by weighing $Y_2O_3$, $Cr_2O_3$ and $Mn_2O_3$ (compounding (1) step) and mixing by a ball mill (mixing step) in the same manner as in Example 1.

This mixed slurry was evaluated by using a laser type granulometer. As a result, the average particle diameter was 1.7 $\mu$m (Table 2).

This average particle diameter is larger than an average particle diameter (1.0$\mu$m) of $Dy_2O_3$ before mixing.

This mixed slurry of $Y_2O_3$, $Cr_2O_3$ and $Mn_2O_3$ was transferred to a porcelain evaporating dish, and then dried by using a hot- air drier at 100- 150°C for 12- 17 hours. Subsequently this mixed solid was roughly ground by using a chaser mill and passed through a sieve (#30 mesh) to obtain a mixed powder of $Y_2O_3$, $Cr_2O_3$ and $Mn_2O_3$. This mixed powder was charged in a crucible made of 99.3% $Al_2O_3$ and then calcined in a high- temperature oven in the air at 1100°C for 2 hours to obtain $Y(Cr_{0.5}Mn_{0.5})O_3$ as a bulk solid (calcinations step) . This bulk solid was then roughly ground by using a chaser mill and passed through a sieve (#30 mesh) to obtain a power.

In the second preparation step, $Y(Cr_{0.5}Mn_{0.5})O_3$ powder obtained in said first preparation step, and commercially available $Dy_2O_3$ (purity : 99.9% or more, an average particle diameter 1.0$\mu$m) were weighed so that a compounding molar ratio (a : b) became a predetermined ratio to make 2000g as the total amount. In the case of sintering, $SiO_2$ and $CaCO_3$ which were converted into a liquid phase within the range from 1500- 1650°C, were used as a sintering aid and $SiO_2$ and $CaCO_3$ were added in an amount of 60g (3wt%) and 90g (4.5wt%), respectively, based on the total amount (2000g) of the above $Y(Cr_{0.5}Mn_{0.5})O_3$ and $Dy_2O_3$ (compounding (2) step) .

A pearl mill device (manufactured by Ashizawa Co., Ltd., RV1V, effective volume: 1.0 liter, actual volume: 0.5 liter) was used as a medium stirring mill to granulate $Y(Cr_{0.5}Mn_{0.5})O_2$, $Dy_2O_3$, $SiO_2$ and $CaCO$. In this step, 3.0kg of $ZrO_2$ balls (diameter: 0.5mm) were used as a grinding medium and 80% of the volume of a stirring vessel were filled with $ZrO_2$ balls. Using 4.5 liter of distilled water as a dispersing medium relative to 2150g of the ground raw material, a binder, a releasant and a dispersant were added, followed by mixing and grinding for 10 hrs. The operation conditions were as follows: circumferential rate: 12m/sec, revolution: 3110 rpm. As a binder, polyvinyl alcohol (PVA) was added in an amount of 1g per 100g of the ground raw material. The resulting mixed ground slurry was evaluated by using a laser type granulometer. As a result, an average particle diameter was 0.4$\mu$m (Table 2) .

This mixed ground slurry was granulated and dried under the conditions of a drying chamber inlet temperature of 200°C and outlet temperature of 120°C by using a spray dryer. The resulting granulated powder was spherical powder having an average particle diameter of 30$\mu$m, and molding of the thermistor element is performed by using this granulated powder (molding step). The resulting molded article of the thermistor element was arranged on a corrugated setter made of $Al_2O_3$ and then sintered in the air at 1600°C for 1 hour to obtain a thermistor element (sintering step). The resulting thermistor elements of Examples 2, 2A and 2B are then incorporated into a temperature sensor in the same manner as in Example 1 and temperature characteristics of the resistivity of each temperature sensor was evaluated. The evaluation results are shown in Table 1. Further, the temperature accuracy of a thermistor element of Example 2 was also evaluated. The evaluation results was shown in Table 2.

As shown in Table 1, themistor elements of Examples 2, 2A and 2B show the same temperature characteristics of the resistivity, this is, a low resistivity and a low resistivity temperature coefficient, as that described in Examples 1, 1A and 2B. Thus, it can be appreciated that the same temperature characteristics of the resistivity can be realized for each compounding molar ratio even when'using different production methods. Regarding temperature accuracy, this Example 2 shows the lowered temperature accuracy of $\pm$10°C as is apparent from Table 2, while it is $\pm$23°C in Example. Namely, according to this Example the scatter can be smaller.

Example 3

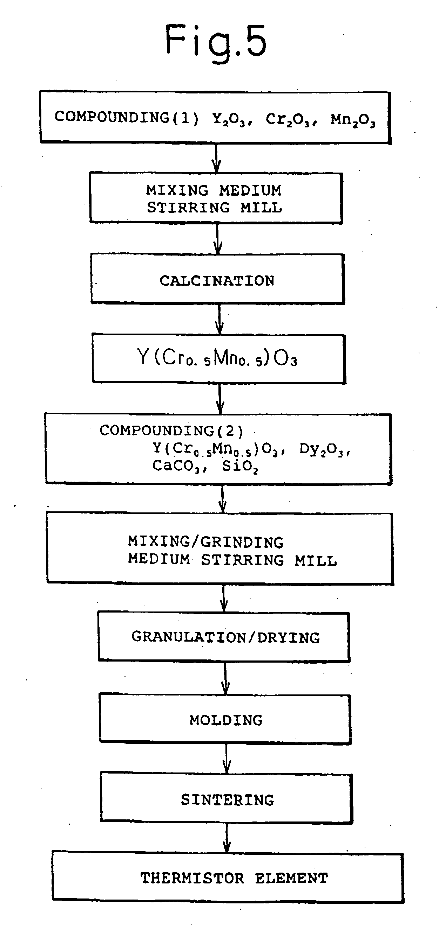

According to a production step shown in FIG. 5, a thermistor element composed of a mixed sintered body having the same composition $aY(Cr_{0.5}Mn_{0.5})O_3 \cdot bDy_2O_3$ as that of Example 1 was produced by another method. As shown in Table 1, a molar ratio (a : b) of $Y(Cr_{0.5}Mn_{0.5})O_3$ and $Dy_2O_3$ was 36 : 64 (Example) . In the same manner, thermistor elements with molar ratios 95 : 5 and 5 : 95 were also produced (Examples 3A and 3B, respectively) . This production step corresponds to a combination of the above- described production method (2) with the method (3) . A medium stirring mill is used both in mixing step of the first preparation step and in mixing/ grinding step of the second production step.

In the first preparation step, raw materials $Y_2O_3$, $Cr_2O_3$ and $Hn_2O_3$ were separately weighed to make 2000g as the total amount (compounding (1) step). Subsequently, these raw-materials are atomized by a medium stirring mill. A pearl mill device was used as a medium stirring mill in the same manner in Example 2. Using 4.5 liter of distilled water as a dispersing medium relative to 2036g of the raw material, a binder, a releasant and a dispersant were added, followed by mixing and grinding for 10 hours (mixing step). The operation conditions were as follows : circumferential rate : 12m/sec, revolutions : 3110rpm. As a binder, polyvinyl alcohol(PVA) was added in an amount of 20g per 2036g of raw material. This mixed ground slurry was evaluated by using a laser type granulometer. As a result, an average particle diameter was 0.3$\mu$m (Table 2). This is smaller than an average particle diameter (1.0$\mu$m) of $Y_2O_3$ before mixing and smaller than 0.5$\mu$m.

The resulting slurry was dried under the conditions of a drying chamber inlet temperature of 200°C and outlet temperature of 120°C by using a spray dryer. The resulting powder was a spherical powder having an average particle diameter of 30μm. This raw material powder was charged in a crucible made of 99.3% $Al_2O_3$ and then calcined in a high- temperature oven in the air at 1100- 1300°C for 1- 2 hours (calcination step) . A calcined body of $Y(Cr_{0.5}Mn_{0.5})$ $O_3$ as a bulk solid was obtained and roughly ground by using a chaser mill and passed through a sieve (#30 mesh) to obtain a powder.

In the second preparation step, the resulting $Y(Cr_{0.5}Mn_{0.5})O_3$ containing powder, and $Dy_2O_3$ powder (an average particle diameter : 1.0μm) were weighed so that a molar ratio becomes to be a predetermined one to make 2000g as the total amount. In addition, as a sintering aid, $SiO_2$ and $CaCO_3$ were added in an amount of 3wt% (60g) and 4.5wt (90g) (compounding step) .

Said compounded material was atomized by using a pearl mill device as a medium stirring mill (mixing/grinding step). The conditions in this step was the same as that of the mixing one of the above described first preparation step. The resulting mixed ground slurry was evaluated by using a laser type granulometer. As a result, an average particle diameter was 0.3μm(Table 2). This is smaller than an average particle diameter 0.1μm) of $Dy_2O_3$ before mixing.

This mixed ground slurry was granulated and dried by using a spray dryer (granulation/drying step), molded (molding step) and then sintered(sintering step) to obtain a thermistor element in the same manner as in a example 1. The resulting thermistor elements of Examples 3, 3A and 3B were then incorporated into temperature sensors in the same manner as in Example 1 and temperature characteristics of the resistivity of each temperature sensor were evaluated. The evaluation results are shown in Table 1. Further, the temperature accuracy of a thermistor element of Example 3 was also evaluated (Table 2). The evaluation results was shown in Table 2.

As shown in Table 1, thermistor elements of Examples 3, 3A and 3B show the same temperature characteristics of the resistivity as that of described in Example 1, 1A and 1B respectively. Thus, it is appreciated that the same temperature characteristics of the resistivity can be realized in the above-described Examples and that the temperature characteristics depend on the compounding molar ratio. In addition, regarding a temperature accuracy, a much better temperature accuracy of ±5°C is shown, as is apparent from Table 2, while it is ±10°C in Example 1. Namely, smaller scatter can be obtained by this method of this Example.

Example 4

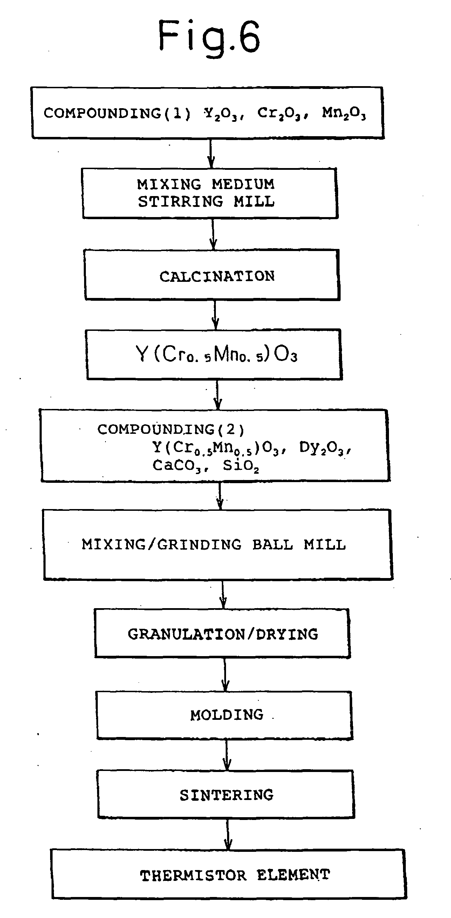

According to a production step shown in FIG. 6, a thermistor element composed of a mixed sinter having the same composition of $aY(Cr_{0.5}Mn_{0.5})O_3 \cdot bDy_2O_3$ as that of Example 1 was produced by another method. As shown in Table 1, a molar ratio (a : b) of $Y(Cr_{0.5}Mn_{0.5})O_3$ and $Dy_2O_3$ was 36 : 64 (Example 4) . In the same manner, thermistor elements with molar ratio 95 : 5 and 5 : 95 were also produced (Examples 4A and 4B, respectively) . This production step corresponds to the above- described production method (3), and thus a medium stirring mill was used in a mixing step of the first preparation step, . In a mixing/ grinding step of the second preparation step, a ball mill is used instead of a medium stirring mill, differing from Example 3.

The first preparation step is carried out in the same manner as in the above described Example 3, and raw materials were weighed (compounding (1) step), mixed and ground by using a medium stirring mill (mixing step) and then sintered (sintering step). A mixed ground slurry was also evaluated by using a laser type granulometer. As a result, an average particle diameter was 0.3μm(Table 2). This is smaller than an average particle diameter of $Y_2O_3$(1.0μm) before mixing and smaller than 0.5μm.

In the second preparation step, $Y(Cr_{0.5}Mn_{0.5})O_3$ powder and $Dy_2O_3$ powder (an average particle diameter 1.μm) were weighed so that a compounding molar ratio became a predetermined ratio to make 2000g as the total amount (compounding (2) step) . The weighed power was then mixed and ground by using a ball mill. Using a resin pot (volume : 20 liter) containing Al2O3 ($\phi$15mm : 10kg, $\phi$20m : 10kg) as a ball mill, these weighed materials and 6000mL of purified water were charged in the pot. The mixture was mixed at 60rpm for 6 hours and ground (mixing/ grinding step) . The resulting mixed ground slurry was evaluated by using a laser type granulometer. As a result, an average particle diameter was 1.6μm (Table 2) . This is larger than that of $Dy_2O_3$ (1.0μm) before mixing.

This mixed ground slurry was granulated and dried by using a spray dryer (granulation/drying step), molded (molding step) and then sintered (sintering step)to obtain a thermistor element in the same manner as in Example 1. The resulting thermistor elements of Examples 4, 4A and 4B were incorporated into a temperature sensor in the same manner as in Example 1 and temperature characteristics of resistivity of each temperature were evaluated. The evaluation results are shown in Table 1. Further, the temperature accuracy of a thermistor element of Example 4 was also evaluated (Table 2).

As shown in Table 1, thermistor element of Examples 4, 4A and 4B show the same temperature characteristics of the resistivity as that of described in Examples 1, 1A and 1B resistively, Thus, it is appreciated that the same temperature characteristics of the resistivity can be realized in the above-described Examples and that the temperature characteristics depend on the compounding molar ratio. In addition, regarding a temperature accuracy, a good result (±9°C) can be obtained in Example 3 as shown in Table 2. Namely, it is confirmed that a lower scatter than that of Example 1($\pm$23°C) can be accomplished by atomizing in the first preparation step.

Comparative Example 1

A thermistor element having a composition of Y ($Cr_{0.5}Mn_{0.5}$) $O_3$ alone without using $Dy_2O_3$ for stabilizing the resistivity was comparatively produced. In the same manner as in Example 1 except for non- adding of $Dy_2O_3$, a thermistor element composed of Y ($Cr_{0.5}Mn_{0.5}$) $O_3$ was produced and then evaluated as a temperature sensor. The evaluation method was the same as in Example 1 and the results are shown in Table 3. As is apparent from Table 3, in case that $Dy_2O_3$ is not used, the resistivity at high temperature range of 1000°C is too low (40$\Omega$) and, therefore the temperature cannot be detected. As is also apparent from the results of the high- temperature durability test (change in resistivity), the change in resistivity $\Delta R$ exceeds $\pm$20% and, therefore, a thermistor element having stable temperature characteristics of the resistivity cannot be provided.

Comparative Example 2

A thermistor element having the composition of $YTiO_3$ alone without using $Dy_2O_3$ for stabilizing the resistivity was comparatively produced. In the same manner as in Example 1 except for the adding of $Dy_2O_3$, a thermistor element composed of $YTiO_3$ was produced by using $Y_2O_3$ and $TiO_2$ as starting materials, and then evaluated as a temperature sensor. The evaluation method was the same as in Example 1 and the results are shown in Table 3. As is apparent from Table3, in case that $Dy_2O_3$ is not used, the resistivity at low temperature range of room temperature (27°C) is too high (more than 1000k$\Omega$) and, therefore the temperature cannot be detected. As is also apparent from the results of the high-temperature durability test (change in resistivity), the change in resistivity $\Delta R$ exceeds $\pm$20% and, therefore, a thermistor element having stable temperature characteristics of the resistivity cannot be provided.

Table 3

| COMPARATIVE EXAMPLE | COMPOSITION OF ELEMENT PORTION | RESISTIVITY (K$\Omega$) | | RESISTIVITY TEMPERATURE COEFFICIENT $\beta$ (K) | CHANGE IN RESISTIVITY $\Delta R$ (%) |
|---|---|---|---|---|---|
| | | ROOM TEMPERATURE (27°C) | 1000°C | | |
| 1 | Y($Cr_{0.5}Mn_{0.5}$)$O_3$ | 10 | 0.04 | 2170 | -20.0 |
| 2 | $YTiO_3$ | > 1000 | 0.2 | 12200 | -40.0 |

Examples 5-8

According to a production step shown in FIG. 1, a thermistor element composed of a complex perovskite oxide Y ($Cr_{0.5}Mn_{0.5}$) $O_3$ and various metallic oxides shown in Table 2 was produced. $Pr_2O_3$ (Example 5), $Sm_2O_3$ (Example 6), $Nd_2O_3$ (Example 7), MgO (Example 8) were used as $AO_x$, respectively. This production step is basically the same as in Example 3, and thus raw materials are atomized by a medium stirring mill both in the mixing step of the first preparation step and in the mixing/ grinding step of the second preparation step.

In the first preparation step, Y ($Cr_{0.5}Mn_{0.5}$) $O_3$ powder was obtained in the same manner as in Example 3. The second preparation step was carried out in the same manner as in Example 3 except for using the above- described metallic oxides $AO_x$ instead of $Dy_2O_3$. The molar ratios of Y ($Cr_{0.5}Mn_{0.5}$) $O_3$ and these metallic oxide were adjusted respectively as listed in Tables 4- 7, and thermistor elements were produced according to the same manner as in Example 3 (Examples 5- 8) . $Pr_2O_3$, $Sm_2O_3$, $Nd_2O_3$ and MgO used as raw materials had high purity (99.9% and more) . An average particle diameters of $Pr_2O_3$, $Sm_2O_3$, $Nd_2O_3$ and MgO were 1.0$\mu$m, 1.0$\mu$m and 2$\mu$m, respectively.

Further, in the same manner, various thermistor elements were produced, where molar ratios of Y ($Cr_{0.5}Mn_{0.5}$) $O_3$ and various metallic oxides of Examples 5- 8 were changed shown as in Tables 4- 7, respectively (Examples 5A-8A and 5B- 8B) .

The temperature sensors made by incorporating the resulting thermistor elements were evaluated regarding the respective temperature characteristics of the resistivity. The evaluation method was the same as in example 1. The results are shown in Tables 4- 7. As is apparent from Tables 4- 7, the above- described thermistor elements can realize almost the same effects as those described in Example 3 regarding the temperature characteristics of the resistivity.

In addition, the evaluation results of the temperature accuracy with respect to thermistor elements of Examples 5-8 are shown in Table 2. The numerical values in parenthesis of the temperature accuracy column in Table 2 mean the temperature accuracy with respect to thermistor elements which were obtained by using a ball mill both in the first and second preparation step in the same manner as in Example 1. As is apparent from comparing both data, regarding the temperature sensors of these Example, a smaller scatter in a temperature accuracy ($\pm$A°C) of $\pm$5°C can be obtained, while the temperature sensors obtained by the same manner as in Example 1 show a scatter of $\pm$23°C-$\pm$25°C. Further, an average particle diameter after mixing in the first preparation step are shown in Table 2 along with one after mixing/grinding step in the second preparation step.

Table 4

| EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta$R (%) |
|---|---|---|---|---|---|---|
| | $YCrMnO_3$ | $Pr_2O_3$ | ROOM TEMPERATURE (27°C) | 1000°C | | |
| 5 | 40 | 60 | 50 | 0.14 | 2307 | -5.0 |
| 5A | 95 | 5 | 30 | 0.13 | 2136 | -5.0 |
| 5B | 5 | 95 | 100 | 0.16 | 2527 | -5.0 |

Table 5

| EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta$R (%) |
|---|---|---|---|---|---|---|
| | $YCrMnO_3$ | $Sm_2O_3$ | ROOM TEMPERATURE (27°C) | 1000°C | | |
| 6 | 35 | 60 | 50 | 0.14 | 2307 | -5.0 |
| 6A | 95 | 5 | 30 | 0.1 | 2239 | -5.0 |
| 68 | 5 | 95 | 100 | 0.16 | 2527 | -5.0 |

Table 6

| EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta$R (%) |
|---|---|---|---|---|---|---|
| | $YCrMnO_3$ | $Nd_2O_3$ | ROOM TEMPERATURE (27°C) | 1000°C | | |
| 7 | 34 | 66 | 50 | 0.13 | 2336 | -5.0 |
| 7A | 95 | 5 | 30 | 0.1 | 2239 | -5.0 |
| 7B | 5 | 95 | 100 | 0.15 | 2552 | -5.0 |

Table 7

| EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta$R (%) |
|---|---|---|---|---|---|---|
| | $YCrMnO_3$ | MgO | ROOM TEMPERATURE (27°C) | 1000°C | | |
| 8 | 44 | 56 | 50 | 0.06 | 2640 | -5.0 |
| 8A | 95 | 5 | 30 | 0.05 | 2511 | -5.0 |

(continued)

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | MgO | ROOM TEMPERATURE (27°C) | 1000°C | | |
| 8B | 5 | 95 | 100 | 0.08 | 2799 | -5.0 |

Example 9 (Reference Example)

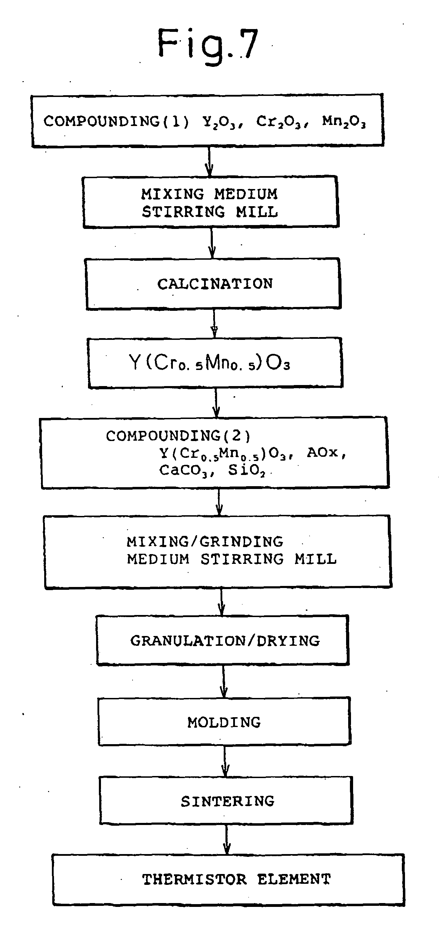

Using a complex metallic oxide $3Al_2O_3 \cdot 2SiO_2$ (mullite) as metallic oxide as shown in Table 2, a thermistor element was produced in the same manner as in the above-described Example 5. As shown in Table 8, a molar ratio (a : b) of complex perovskite oxide $Y(Cr_{0.5}Mn_{0.5})O_3$ and a metallic oxide was 39 : 1. A thermistor element was produced in the same manner as in Example 5 except for using $3Al_2O_3 \cdot 2SiO_2$ instead of Pr2O3 in compounding (2) step of the second preparation step in a flow chart of FIG. 7 (Example 9).

In the same manner, thermistor elements with molar ratios 95 : 5 and 5 : 95 were also produced (Examples 9A and 9B). $3Al_2O_3 \cdot 2SiO_2$ used had a high purity (99.9% or more) and an average particle diameter of $2\mu m$.

The temperature sensors made by incorporating the resulting thermistor elements were evaluated regarding the respective temperature characteristics of the resistivity. The evaluation method was the same as in Example 1. The results are shown in Table 8. As is apparent from Table 8, this thermistor element can realize almost the same effect as that described in Example 3 regarding the temperature characteristics of the resistivity. In addition, the evaluation result of the temperature accuracy of the thermistor element of this Example was shown in Table 2. Regarding a thermistor element of this Example, a temperature accuracy of $\pm 5°C$ (small scatter) can be obtained.

Table 8

| EXAMPLE | RAW MATERIAL COMPOSITION (mol%). | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $3Al_2O_3 \cdot 2SiO_2$ | ROOM TEMPERATURE (27°C) | 1000°C | | |
| 9 | 39 | 61 | 50 | 0.07 | 2579 | -3.0 |
| 9A | 95 | 5 | 30 | 0.06 | 2439 | -3.0 |
| 9B | 5 | 95 | 100 | 0.09 | 2753 | -3.0 |

Examples 10-13

Thermistor elements composed of a complex oxide $Y(Cr_{0.5}Mn_{0.5})O_3$ and various metallic oxides shown in Tables 9-12 were produced in the same manner as in Example 5. Complex oxides $YAlO_3$ (Example 10), $YAl_5O_{12}$ (Example 11), $MgAl_2O_3$ (Example 12), and $Y_2SiO_5$ (Example 13) were used as $AO_x$ respectively. Molar ratios (a : b) of a complex perovskite oxide $Y(Cr_{0.5}Mn_{0.5})O_3$ and metallic oxides were adjusted as shown in Tables 9-12. Thermistor elements are produced in the same as in Example 5 except for using said various complex oxides instead of $Pr_2O_3$ in the compounding (2) step of the second preparation step shown in FIG. 7 (Examples 10-13). Further, in the same manner, various thermistor elements were produced, where molar ratios (a : b) were changed as shown in Tables 9-12, respectively (Examples 10A-13A and 10B-13B). Raw materials used had a high purity (99.9% and more) and an average particle of 1-$3\mu m$.

The temperature sensors made by incorporating the resulting thermistor elements were evaluated regarding the respective temperature characteristics of the resistivity. The evaluation method was the same as in Example 1. The results are shown in Tables 9-12. As is apparent from Tables 9-12, thermistor elements of these Examples can realize almost the same effect as that described in Example 3 regarding the temperature characteristics of the resistivity. In addition, the temperature accuracy of thermistor elements of Examples 10-13 were evaluated. As a result, all of them demonstrated a good temperature accuracy of $\pm 5°C$.

Table 9

| REFERENCE EXAMPLE | RAW MATERIAL COMPOSITION (mol%) | | RESISTIVITY (K$\Omega$) | | RESISTIVY TEMPERATURE COEFFICIENT $\beta$ (K) | CHANGE IN RESISTIVITY $\Delta R$ (%) |
|---|---|---|---|---|---|---|
| | $YCrMnO_3$ | $YAlO_3$ | ROOM TEMPERATURE (27°C) | 1000°C | | |
| 10 | 38 | 62 | 50 | 0.14 | 2307 | -5.0 |
| 10A | 95 | 5 | 30 | 0.1 | 2239 | -5.0 |
| 10B | 5 | 95 | 100 | 0.16 | 2527 | -5.0 |

Table 10

| REFERENCE EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta R$ (%) |
|---|---|---|---|---|---|---|
| | $YCrMnO_3$ | $Y_3Al_5O_{12}$ | ROOM TEMPERATURE (27°C) | 1000°C | | |
| 11 | 39 | 61 | 50 | 0.14 | 2307 | -5.0 |
| 11A | 95 | 5 | 30 | 0.1 | 2239 | -5.0 |
| 11B | 5 | 95 | 100 | 0.16 | 2527 | -5.0 |

Table 11

| REFERENCE EXAMPLE | RAW MATERIAL COMPOSITION (mol%) | | RESISTIVITY (K$\Omega$) | | RESISTIVITY TEMPERATURE COEFFICIENT $\beta$ (K) | CHANCE IN RESISTIVITY $\Delta R$ (%) |
|---|---|---|---|---|---|---|
| | $YCrMnO_3$ | $MgAl_2O_4$ | ROOM TEMPERATURE (27°C) | 1000°C | | |
| 12 | 40 | 60 | 50 | 0.06 | 2640 | -5.0 |
| 12A | 95 | 5 | 30 | 0.05 | 2511 | -5.0 |
| 12B | 5 | 95 | 100 | 0.07 | 2851 | -5.0 |

Table 12

| REFERENCE EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta R$ (%) |
|---|---|---|---|---|---|---|
| | $YCrMnO_3$ | $Y_2SiO_5$ | ROOM TEMPERATURE (27°C) | 1000°C | | |
| 13 | 37 | 63 | 50 | 0.07 | 2579 | -5.0 |
| 13A | 95 | 5 | 30 | 0.06 | 2439 | -5.0 |
| 13B | 5 | 95 | 100 | 0.08 | 2798 | -5.0 |

Example 14-41

According to a production step shown in FIG. 7, thermistor elements composed of a complex perovskite oxide $Y(Cr_{0.5}Mn_{0.5})O_3$ and various metallic oxides shown in Tables 13 and 14 were produced in the same manner as in Examples 5- 8. This production step is the same as in Examples 5- 8 except for using said various metallic oxides shown in Tables 13 and 14 in the compounding (2) step, and changing molar rations of $Y(Cr_{0.5}Mn_{0.5})O_3$ and these metallic oxides to ones shown in Tables 15- 42 (Examples 14- 41) . Metallic oxides used as raw materials have a high purity (99.9% and more) and an average particle diameter of $MgCr_2O_4$, $2MgO \cdot SiO_2$ and $CaSiO_3$ is $2\mu m$, the particle diameters of the others being $1.0\mu m$.

Table 13

| EXAMPLE | RAW MATERIAL COMPONENT IN CASE OF GRINDING | AVERAGE PARTICLE DIAMETER AFTER MIXING ($\mu$m) | AVERAGE PARTICLE DIAMETER AFTER GRINDING ($\mu$m) | TEMPERATURE ACCURACY (°C) |
|---|---|---|---|---|
| 14 | $YCrMnO_3, Sc_2O_3$ | 0.3 | 0.3 | $\pm 5$ ($\pm 25$) |
| 15 | $YCrMnO_3, ZrO_2$ | 0.3 | 0.3 | $\pm 5$ ($\pm 25$) |
| 16 | $YCrMnO_3, Lu_2O_3$ | 0.3 | 0.3 | $\pm 5$ ($\pm 25$) |
| 17 | $YCrMnO_3, HfO_2$ | 0.3 | 0.3 | $\pm 5$ ($\pm 25$) |
| 18 | $YCrMnO_3, Cr_2O_3$ | 0.3 | 0.3 | $\pm 5$ ($\pm 25$) |
| 19 | $YCrMnO_3, Eu_2O_3$ | 0.3 | 0.3 | $\pm 5$ ($\pm 25$) |
| 20 | $YCrMnO_3, Gd_2O_3$ | 0.3 | 0.3 | $\pm 5$ ($\pm 25$) |
| 21 | $YCrMnO_3, Tb_2O_3$ | 0.3 | 0.3 | $\pm 5$ ($\pm 25$) |
| 22 | $YCrMnO_3, Ho_2O_3$ | 0.3 | 0.3 | $\pm 5$ ($\pm 25$) |
| 23 | $YCrMnO_3, Er_2O_3$ | 0.3 | 0.3 | $\pm 5$ ($\pm 25$) |
| 24 | $YCrMnO_3, Tm_2O_3$ | 0.3 | 0.3 | $\pm 5$ ($\pm 25$) |
| 25 | $YCrMnO_3, Yb_2O_3$ | 0.3 | 0.3 | $\pm 5$ ($\pm 25$) |
| 26 | $YCrMnO_3, MgCr_2O_4$ | 0.3 | 0.3 | $\pm 5$ ($\pm 27$) |
| 27 | $YCrMnO_3, CeO_2$ | 0.3 | 0.3 | $\pm 5$ ($\pm 25$) |

Table 14

| EXAMPLE | RAW MATERIAL COMPONENT IN CASE OF GRINDING | AVERAGE PARTICLE DIAMETER AFTER MIXING ($\mu$m) | AVERAGE PARTICLE DIAMETER AFTER GRINDING ($\mu$m) | TEMPERATURE ACCURACY (°C) |
|---|---|---|---|---|
| 28* | $YCrMnO_3, SiO_2$ | 0.3 | 0.3 | $\pm 5$ ($\pm 24$) |
| 29* | $YCrMnO_3, TiO_2$ | 0.3 | 0.3 | $\pm 5$ ($\pm 25$) |
| 30 | $YCrMnO_3, MnO$ | 0.3 | 0.3 | $\pm 5$ ($\pm 25$) |
| 31 | $YCrMnO_3, Mn_2O_3$ | 0.3 | 0.3 | $\pm 5$ ($\pm 25$) |
| 32 | $YCrMnO_3, Fe_2O_3$ | 0.3 | 0.3 | $\pm 5$ ($\pm 25$) |
| 33 | $YCrMnO_3, Fe_3O_4$ | 0.3 | 0.3 | $\pm 5$ ($\pm 25$) |
| 34 | $YCrMnO_3, NiO$ | 0.3 | 0.3 | $\pm 5$ ($\pm 25$) |
| 35 | $YCrMnO_3, ZnO$ | 0.3 | 0.3 | $\pm 5$ ($\pm 25$) |
| 36 | $YCrMnO_3, Ga_2O_3$ | 0.3 | 0.3 | $\pm 5$ ($\pm 25$) |
| 37 | $YCrMnO_3, Nb_2O_5$ | 0.3 | 0.3 | $\pm 5$ ($\pm 25$) |
| 38 | $YCrMnO_3, SnO_2$ | 0.3 | 0.3 | $\pm 5$ ($\pm 25$) |

(continued)

| EXAMPLE | RAW MATERIAL COMPONENT IN CASE OF GRINDING | AVERAGE PARTICLE DIAMETER AFTER MIXING ($\mu$m) | AVERAGE PARTICLE DIAMETER AFTER GRINDING ($\mu$m) | TEMPERATURE ACCURACY (°C) |
|---|---|---|---|---|
| 39 | $YCrMnO_3, Ta_2O_5$ | 0.3 | 0.3 | $\pm 5$ ($\pm 25$) |
| 40 | $YCrMnO_3, 2MgO \cdot SiO_2$ | 0.3 | 0.3 | $\pm 5$ ($\pm 24$) |
| 41* | $YCrMnO_3, CaSiO_3$ | 0.3 | 0.3 | $\pm 5$ ($\pm 23$) |
| * Reference Example | | | | |

Further, in the same manner, various thermistor elements were produced, where molar ratios of Y $(Cr_{0.5}Mn_{0.5})$ $O_3$ and each metallic oxide are changed as shown in Tables 15- 42, respectively (Examples 14A- 41A and 14B- 41B) . The temperature sensors made by incorporating the resulting thermistor elements were evaluated regarding the respective temperature characteristics of the resistivity. The evaluation method was same as in Example 1. The results are shown in Tables 15- 42. As is apparent from Tables 15- 42, the thermistor elements of Examples 14- 41 can realize the same effects as that described in above- described Examples.

Table 15

| EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta$R (%) |
|---|---|---|---|---|---|---|
| | $YCrMnO_3$ | $Sc_2O_3$ | ROOM TEMPERATURE (27°C) | 1000°C | | |
| 14 | 42 | 58 | 50 | 0.06 | 2640 | -5 |
| 14A | 95 | 5 | 30 | 0.05 | 2511 | -5 |
| 14B | 5 | 95 | 100 | 0.08 | 2851 | -5 |

Table 16

| EXAMPLE | RAW MATERIAL COMPOSITION (mol%) | | RESISTIVITY (K$\Omega$) | | RESISTIVITY TEMPERATURE COEFFICIENT $\beta$ (K) | CHANGE IN RESISTIVITY $\Delta$R (%) |
|---|---|---|---|---|---|---|
| | $YCrMnO_3$ | $ZrO_2$ | ROOM TEMPERATURE (27°C) | 1000°C | | |
| 15 | 34 | 66 | 50 | 0.12 | 2368 | -5 |
| 15A | 95 | 5 | 30 | 0.10 | 2239 | -5 |
| 15B | 5 | 95 | 100 | 0.15 | 2552 | -5 |

Table 17

| EXAMPLE | RAW MATERIAL COMPOSITION (mol%) | | RESISTIVITY (K$\Omega$) | | RESISTIVITY TEMPERATURE COEFFICIENT $\beta$ (K) | CHANCE IN RESISTIVITY $\Delta$R (%) |
|---|---|---|---|---|---|---|
| | $YCrMnO_3$ | $Lu_2O_3$ | ROOM TEMPERATURE (27°C) | 1000°C | | |
| 16 | 42 | 58 | 50 | 0.06 | 2640 | -5 |
| 16A | 95 | 5 | 30 | 0.05 | 2511 | -5 |

(continued)

| EXAMPLE | RAW MATERIAL COMPOSITION (mol%) | | RESISTIVITY (KΩ) | | RESISTIVITY TEMPERATURE COEFFICIENT β (K) | CHANCE IN RESISTIVITY ΔR (%) |
|---|---|---|---|---|---|---|
| | YCrMnO$_3$ | Lu$_2$O$_3$ | ROOM TEMPERATURE (27°C) | 1000°C | | |
| 16B | 5 | 95 | 100 | 0.08 | 2799 | -5 |

Table 18

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | HfO$_2$ | ROOM TEMPERATURE (27°C) | 1000°C | | |
| 17 | 40 | 60 | 50 | 0.07 | 2579 | -5 |
| 17A | 95 | 5 | 30 | 0.06 | 2439 | -5 |
| 178 | 5 | 95 | 100 | 0.08 | 2799 | -5 |

Table 19

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | Cr$_2$O$_3$ | ROOM TEMPERATURE (27°C) | 1000°C | | |
| 18 | 33 | 67 | 50 | 0.11 | 2517 | -5 |
| 18A | 95 | 5 | 30 | 0.10 | 2239 | -5 |
| 18B | 5 | 96 | 100 | 0.14 | 2579 | -5 |

Table 20

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | Eu$_2$O$_3$ | ROOM TEMPERATURE (27°C) | 1000°C | | |
| 19 | 41 | 59 | 50 | 0.06 | 2640 | -5 |
| 19A | 95 | 5 | 30 | 0.05 | 2511 | -5 |
| 19B | 5 | 95 | 100 | 0.08 | 2799 | -5 |

Table 21

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Gd_2O_3$ | ROOM TEMPERATURE (27°C) | 1000°C | | |
| 20 | 41 | 59 | 50 | 0.06 | 2640 | -5 |
| 20A | 95 | 5 | 30 | 0.05 | 2511 | -5 |
| 20B | 5 | 95 | 100 | 0.08 | 2799 | -5 |

Table 22

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Tb_2O_3$ | ROOM TEMPERATURE (27°C) | 1000°C | | |
| 21 | 41 | 59 | 50 | 0.06 | 2640 | -5 |
| 21A | 95 | 5 | 30 | 0.05 | 2511 | -5 |
| 21B | 5 | 95 | 100 | 0.08 | 2799 | -5 |

Table 23

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Ho_2O_3$ | ROOM TEMPERATURE (27°C) | 1000°C | | |
| 22 | 40 | 60 | 50 | 0.07 | 2579 | -5 |
| 22A | 95 | 5 | 30 | 0.06 | 2439 | -5 |
| 22B | 5 | 95 | 100 | 0.08 | 2799 | -5 |

Table 24

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Er_2O_3$ | ROOM TEMPERATURE (27°C) | 1000°C | | |
| 23 | 40 | 60 | 50 | 0.07 | 2579 | -5 |
| 23A | 95 | 5 | 30 | 0.06 | 2439 | -5 |
| 23B | 5 | 95 | 100 | 0.08 | 2799 | -5 |

Table 25

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Tm_2O_3$ | ROOM TEMPERATURE (27°C) | 1000°C | | |
| 24 | 40 | 60 | 50 | 0.07 | 2579 | -5 |
| 24A | 95 | 5 | 30 | 0.06 | 2439 | -5 |
| 24B | 5 | 95 | 100 | 0.08 | 2799 | -5 |

Table 26

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Yb_2O_3$ | ROOM TEMPERATURE (27°C) | 1000°C | | |
| 25 | 40 | 60 | 50 | 0.14 | 2307 | -5 |
| 25A | 95 | 5 | 30 | 0.13 | 2136 | -5 |
| 25B | 5 | 95 | 100 | 0.16 | 2527 | -5 |

Table 27

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $MgCr_2O_4$ | ROOM TEMPERATURE (27°C) | 1000°C | | |
| 26 | 42 | 58 | 50 | 0.06 | 2640 | -5 |
| 26A | 95 | 5 | 30 | 0.05 | 2511 | -5 |
| 26B | 5 | 95 | 100 | 0.08 | 2799 | -5 |

Table 28

| EXAMPLE | RAW MATERIAL COMPOSITION (mol%) | | RESISTIVITY (KΩ) | | RESISTIVITY TEMPERATURE COEFFICIENT β (K) | CHANCE IN RESISTIVITY ΔR (%) |
|---|---|---|---|---|---|---|
| | $YCrMnO_3$ | $CeO_2$ | ROOM TEMPERATURE (27°C) | 1000°C | | |
| 27 | 34 | 66 | 50 | 0.12 | 2.368 | -5 |
| 27A | 95 | 5 | 30 | 0.10 | 2239 | -5 |
| 27B | 5 | 95 | 100 | 0.15 | 2552 | -5 |

Table 29

| REFERENCE EXAMPLE | RAW MATERIAL COMPOSITION (mol%) | | RESISTIVITY (KΩ) | | RESISTIVITY TEMPERATURE COEFFICIENT β (K) | CHANCE IN RESISTIVITY ΔR (%) |
|---|---|---|---|---|---|---|
| | $YCrMnO_3$ | $SiO_2$ | ROOM TEMPERATURE (27°C) | 1000°C | | |
| 28 | 39 | 61 | 50 | 0.11 | 2402 | -5 |
| 28A | 95 | 5 | 30 | 0.09 | 2280 | -5 |
| 28B | 5 | 95 | 100 | 0.14 | 2579 | -5 |

Table 30

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $TiO_2$ | ROOM TEMPERATURE (27°C) | 1000°C | | |
| 29 | 30 | 70 | 50 | 0.12 | 2368 | -5 |
| 29A | 95 | 5 | 30 | 0.10 | 2239 | -5 |
| 29B | 5 | 95 | 100 | 0.15 | 2552 | -5 |

Table 31

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | MnO | ROOM TEMPERATURE (27°C) | 1000°C | | |
| 30 | 30 | 70 | 50 | 0.07 | 2579 | -5 |
| 30A | 95 | 5 | 30 | 0.06 | 2439 | -5 |
| 30B | 5 | 95 | 100 | 0.08 | 2799 | -5 |

Table 32

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Mn_2O_3$ | ROOM TEMPERATURE (27°C) | 1000°C | | |
| 31 | 35 | 65 | 50 | 0.12 | 2368 | -5 |
| 31A | 95 | 5 | 30 | 0.10 | 2239 | -5 |
| 31B | 5 | 95 | 100 | 0.15 | 2552 | -5 |

Table 33

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | Fe$_2$O$_3$ | ROOM TEMPERATURE (27°C) | 1000°C | | |
| 32 | 32 | 68 | 50 | 0.07 | 2579 | -5 |
| 32A | 95 | 5 | 30 | 0.06 | 2439 | -5 |
| 32B | 5 | 95 | 100 | 0.08 | 2799 | -5 |

Table 34

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | Fe$_3$O$_4$ | ROOM TEMPERATURE (27°C) | 1000°C | | |
| 33 | 33 | 67 | 50 | 0.07 | 2579 | -5 |
| 33A | 95 | 5 | 30 | 0.05 | 2511 | -5 |
| 33B | 5 | 95 | 100 | 0.08 | 2799 | -5 |

Table 35

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | NiO | ROOM TEMPERATURE (27°C) | 1000°C | | |
| 34 | 34 | 66 | 50 | 0.11 | 2402 | -5 |
| 34A | 95 | 5 | 30 | 0.09 | 2280 | -5 |
| 34B | 5 | 95 | 100 | 0.13 | 2608 | -5 |

Table 36

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | YCrMnO$_3$ | ZnO | ROOM TEMPERATURE (27°C) | 1000°C | | |
| 35 | 30 | 70 | 50 | 0.06 | 2640 | -5 |
| 35A | 95 | 5 | 30 | 0.05 | 2511 | -5 |
| 35B | 5 | 95 | 100 | 0.07 | 2851 | -5 |

Table 37

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Ga_2O_3$ | ROOM TEMPERATURE (27°C) | 1000°C | | |
| 36 | 41 | 59 | 50 | 0.06 | 2640 | -5 |
| 36A | 95 | 5 | 30 | 0.05 | 2511 | -5 |
| 36B | 5 | 95 | 100 | 0.08 | 2799 | -5 |

Table 38

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $Nb_2O_5$ | ROOM TEMPERATURE (27°C) | 1000°C | | |
| 37 | 40 | 60 | 50 | 0.06 | 2640 | -5 |
| 37A | 95 | 5 | 30 | 0.05 | 2511 | -5 |
| 37B | 5 | 95 | 100 | 0.08 | 2799 | -5 |

Table 39

| EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $SnO_2$ | ROOM TEMPERATURE (27°C) | 1000°C | | |
| 38 | 34 | 66 | 50 | 0.11 | 2402 | -5 |
| 38A | 95 | 5 | 30 | 0.09 | 2280 | -5 |
| 38B | 5 | 95 | 100 | 0.14 | 2579 | -5 |

Table 40

| EXAMPLE | RAW MATERIAL COMPOSITION (mol%) | | RESISTIVITY (KΩ) | | RESISTIVITY TEMPERATURE CEOFFICIENT β (K) | CHANGE IN RESISTIVITY ΔR (%) |
|---|---|---|---|---|---|---|
| | $YCrMnO_3$ | $Ta_2O_5$ | ROOM TEMPERATURE (27°C) | 1000°C | | |
| 39 | 30 | 70 | 50 | 0.06 | 2640 | -5 |
| 39A | 95 | 5 | 30 | 0.05 | 2511 | -5 |
| 39B | 5 | 95 | 100 | 0.07 | 2851 | -5 |

Table 41

| EXAMPLE | RAW MATERIAL COMPOSITION (mol%) | | RESISTIVITY (KΔ) | | RESISTIVITY TEMPERATURE COEFFICIENT β (K) | CHANGE IN RESISTIVITY ΔR (%) |
|---|---|---|---|---|---|---|
| | $YCrMnO_3$ | $2MgO·SiO_2$ | ROOM TEMPERATURE (27°C) | 1000°C | | |
| 40 | 40 | 60 | 50 | 0.11 | 2402 | -5 |
| 40A | 95 | 5 | 30 | 0.09 | 2280 | -5 |
| 40B | 5 | 95 | 100 | 0.14 | 2579 | -5 |

Table 42

| REFERENCE EXAMPLE | RAW MATERIAL COMPOSITION (mol%) | | RESISTIVITY (KΩ) | | RESISTIVITY TEMPERATURE COEFFICIENT β (K) | CHANGE IN RESISTIVITY ΔR (%) |
|---|---|---|---|---|---|---|
| | $YCrMnO_3$ | $CaSiO_3$ | ROOM TEMPERATURE (27°C) | 1000°C | | |
| 41 | 40 | 60 | 50 | 0.06 | 2640 | -5 |
| 41A | 95 | 5 | 30 | 0.05 | 2511 | -5 |
| 41B | 5 | 95 | 100 | 0.08 | 2799 | -5 |

In addition, the evaluation results of the temperature accuracy with respect thermistor elements of examples 14-41 were shown in Tables 13 and 14. The numerical values in parenthesis of the temperature accuracy column in Tables 13 and 14 mean the temperature accuracy with respect to thermistor elements which were obtained using a ball mill both in the first and second preparation steps in the same manner as Example 1. As is apparent from comparing both data, regarding the temperature sensors of these Example, smaller scatters in a temperature accuracy ($\pm$A°C) of $\pm$5°C can be obtained, while the temperature sensors obtained by the same manner as in Example 1 show a scatter of $\pm$23°C. Further, an average particle diameter after mixing in the first preparation step is shown in Table 2 along with one after mixing/grinding step in the second preparation step.

As mentioned above, according to the present invention, the resistivity and resistivity temperature coefficient of a thermistor element can be controlled in a desired range to stabilize the characteristics by optionally compounding a complex perovskite oxide $(MM')O_3$ having a low resistivity and resistivity temperature coefficient with a metallic oxide $AO_x$ having a high resistivity in a range of high temperature and high heat resistance, and sintering. Therefore, the present invention can provide a thermistor element which can detect temperature of a wide range from room temperature to 1000°C, and have stable characteristics, that is a small change in resistivity in the heat history from room temperature to 1000°C to highly improve reliability and durability of a temperature sensor.

Furthermore, according to a method of producing a thermistor element of the present invention, the temperature accuracy ($\pm$A°C) can be reduced to $\pm$10°C or less by atomizing raw materials for a thermistor element and controlling an average particle within a predetermined range to obtain a uniformly mixed composition. Thereby, it is possible to provide a temperature sensor with a improved accuracy.

Various metallic oxides $AO_x$ used in the above-described Examples 1-41 were classified to a group 1 containing oxides with a melting point not lower than 2000°C and another group 2 containing oxide with a melting point lower than 2000°C. Sintering temperatures of thermistor elements of the above-described Examples 1-41 and the evaluation results of heat resistance were shown in Tables 43-45. Table 43 contains oxides with a melting point not lower than 2400°C among the group 1, and Table 44 contains oxides with a melting point not lower than 2000°C and lower than 2400°C among the group 1. Table 45 contains oxides belonging to the group 2. The sintering temperature is a temperature at which the most stable resistivity characteristics can be obtained in each thermistor composition of the above-described Examples 1-41. Heat resistance of a thermistor element is evaluated as follows : Thermistor elements having each composition are charged into a high temperature oven and maintained at the evaluation temperature (1200°C, 1400°C and 1500°C) for 100 hours, and change in resistivity of elements was measured.

The evaluation was carried out based on the following standards.

$$\text{Change in resistivity (\%) = ((resistivity after testing/}$$
$$\text{resistivity before testing}$$
$$\text{(initial)-1)×100}$$

Standards for judging ○: change in resistivity less than 5%
□: change in resistivity of 5%-10%
×: change in resistivity not less than 10%

Table 43

| $AO_x$ | MELTING POINT OF $AO_x$ (°C) | SINTERING TEMPERATURE OF THERMISTOR ELEMENT (°C) | EVALUATION TEMPERATURE OF HEAT-RESISTANCE TEST | | |
|---|---|---|---|---|---|
| | | | 1200°C | 1400°C | 1500°C |
| MgO | 3073 | 1650 | ○ | ○ | ○ |
| $Sc_2O_3$ | 2678 | 1650 | ○ | ○ | ○ |
| $ZrO_2$ | 2690 | 1650 | ○ | ○ | ○ |
| $Lu_2O_3$ | 2427 | 1650 | ○ | ○ | ○ |
| $HfO_2$ | 2790 | 1650 | ○ | ○ | ○ |

Table 44

| $AO_x$ | MELTING POINT OF $AO_x$ (°C) | SINTERING TEMPERATURE OF THERMISTOR ELEMENT (°C) | EVALUATION TEMPERATURE OF HEAT-RESISTANCE TEST | | |
|---|---|---|---|---|---|
| | | | 1200°C | 1400°C | 1500°C |
| $Cr_2O_3$ | 2300 | 1600 | ○ | ○ | ○ |
| $Pr_2O_3$ | 2183 | 1600 | ○ | ○ | ○ |
| $Nd_2O_3$ | 2233 | 1600 | ○ | ○ | ○ |
| $Sm_2O_3$ | 2269 | 1600 | ○ | ○ | ○ |
| $Eu_2O$ | 2291 | 1600 | ○ | ○ | ○ |
| $Gd_2O_3$ | 2339 | 1600 | ○ | ○ | ○ |
| $Tb_2O_3$ | 2303 | 1600 | ○ | ○ | ○ |
| $Dy_2O_3$ | 2228 | 1600 | ○ | ○ | ○ |
| $Ho_2O_3$ | 2330 | 1650 | ○ | ○ | ○ |
| $Er_2O_3$ | 2344 | 1650 | ○ | ○ | ○ |
| $Tm_2O_3$ | 2341 | 1650 | ○ | ○ | ○ |
| $Yb_2O_3$ | 2355 | 1650 | ○ | ○ | ○ |
| $MgCr_2O_4$ | 2310 | 1600 | ○ | ○ | ○ |
| $CeO_2$ | 2210 | 1600 | ○ | ○ | ○ |

Table 45

| AO$_x$ | MELTING POINT OF AO$_x$ (°C) | SINTERING TEMPERATURE OF THERMISTOR ELEMENT (°C) | EVALUATION TEMPERATURE OF HEAT-RESISTANCE TEST | | |
|---|---|---|---|---|---|
| | | | 1200°C | 1400°C | 1500°C |
| SiO$_2$* | 1720 | 1400 | ○ | × | × |
| TiO$_2$ * | 1856 | 1500 | ○ | Δ | × |
| MnO | 1785 | 1450 | ○ | × | × |
| Mn$_2$O$_3$ | 1340 | 1200 | ○ | × | × |
| Fe$_2$O$_3$ | 1562 | 1300 | ○ | × | × |
| Fe$_3$O$_4$ | 1538 | 1300 | ○ | × | × |
| NiO | 1957 | 1500 | ○ | Δ | × |
| ZnO | 1975 | 1500 | ○ | Δ | × |
| Ga$_2$O$_3$ | 1740 | 1450 | ○ | × | × |
| Nb$_2$O$_5$ | 1510 | 1300 | ○ | × | × |
| SnO$_2$ | 1626 | 1300 | ○ | × | × |
| Ta$_2$O$_5$ | 1885 | 1500 | ○ | × | × |
| 2MgOSiO$_2$ | 1900 | 1500 | ○ | × | × |
| MgAl$_2$O$_4$ | 1995 | 1500 | ○ | Δ | × |
| CaSiO$_3$ * | 1530 | 1300 | ○ | × | × |
| Y$_2$SiO$_5$ * | 1980 | 1500 | ○ | Δ | × |
| 3Al$_2$O$_3$ · 2SiO$_2$* | 1680 | 1300 | ○ | × | × |
| YAlO$_3$ * | 1835 | 1500 | ○ | Δ | × |
| YAl$_5$Ol$_2$ * | 1930 | 1500 | ○ | Δ | × |
| * Reference | | | | | |

As is apparent from Tables 43 and 44, a thermistor element obtained by using a metallic oxide of group 1 (a melting point is not lower than 2000°C) has a small change in resistivity (up to 1500°C) of lower than 5%, that is good heat resistance. These metallic oxides AO$_x$ with a higher melting point are expected to have an higher effect to enhance heat resistance, but the group containing oxides with a melting point not lower than 2400°C in Table 43 have a higher sintering temperature of 1650°C. Accordingly, from the view point of energy costs, oxides with a lower sintering temperature of 1600-1650°C in Table 44 are more advantageous. Further, as is apparent from Table 45, a thermistor element which is obtained by using a metallic oxide of group 2 (a melting point is lower than 2000°C) is inferior to oxides of group. 1 in change in resistivity at 1400°C and 1500°C, but its change in resistivity is lower than 5% and is enough heat resistant to use in practice. In addition, it can be sintered at lower temperature of 1200-1500°C and can be easily sintered. Therefore, when a thermistor element is produced according to the present invention, a metallic oxide AO$_x$ can be selected to obtain desired characteristics, considering the influence of lead wires, manufacturing costs and working environment, etc.

Claims

1. A thermistor element comprising a mixed sintered body (MM') O$_3$•AO$_x$ obtainable by mixing and sintering a complex perovskite oxide (MM') O$_3$ and a metallic oxide AO$_x$,
   wherein, when a is a molar fraction of said complex perovskite oxide (MM') O$_3$ of a mixed sintered body and b is a molar fraction of said metallic oxide AO$_x$, a and b satisfy the relations $0 \leq a < 1.0$, $0.05 < b \leq 0.95$ and a+b=1,
   wherein said M in said complex perovskite oxide (MM') O3 is at least one element selected from Mg, Ca, Sr, Ba, Y, Ce, Pr, Nd, Sm, Eu, Gd, Tb, Dy, Ho, Yb and Sc, and M' is at least one element selected from Al, Ga, Ti, Zr, Hf, V, Nb, Ta, Cr, Mo, W, Mn, Tc, Re, Fe, Co, Ni, Ru, Rh, Pd, Os, Ir and Pt
and wherein a metal A in said metallic oxide $AO_x$ is at least one element selected from B, Mg, Sc, Cr, Mn, Fe, Ni, Zn, Ga, Ge, Sr, Zr, Nb, Sn, Ce, Pr, Nd, Sm, Eu, Gd, Tb, Dy, Ho, Er, Tm, Yb, Lu, Hf and Ta.

2. A thermistor element according to claim 1, wherein said metallic oxide $AO_x$ is at least one metallic oxide selected from MgO, $SC_2O_3$, $Cr_2O_3$, MnO, $Mn_2O_3$, $Fe_2O_3$, $Fe_3O_4$, NiO, ZnO, $Ga_2O_3$, $ZrO_2$, $Nb_2O_5$, $SnO_2$, $CeO_2$, $Pr_2O_3$, $Nd_2O_3$, $Sm_2O_3$, $Eu_2O_3$, $Gd_2O_3$, $Tb_2O_3$, $Dy_2O_3$, $HO_2O_3$, $Er_2O_3$, $Tm_2O_3$, $Yb_2O_3$, $Lu_2O_3$, $HfO_2$, $Ta_2O_5$ and $MgCrO_4$.

3. A thermistor element according to claim 1, wherein said metallic oxide $AO_x$ is at least one metallic oxide selected from MgO, $Sc_2O_3$, $ZrO_2$, $Lu_2O_3$, $HfO_2$, $Cr_2O_3$, $Pr_2O_3$, $Nd_2O_3$, $Sm_2O_3$, $Eu_2O_3$, $Gd_2O_3$, $Tb_2O_3$, $Dy_2O_3$, $HO_2O_3$, $Er_2O_3$, $Tm_2O_3$, $Yb_2O_3$, $CeO_2$ and $MgCrO_4$.

4. A thermistor element according to claim 1, wherein said metallic oxide $AO_x$ is at least one metallic oxide selected from MnO, $Mn_2O_3$, $Fe_2O_3$, $Fe_3O_4$, NiO, ZnO, $Ga_2O_3$, $Nb_2O_5$, $SnO_2$, $Ta_2O_5$.

5. A thermistor element according to one of claims 1-4, further comprising a sintering aid composed of at least one of CaO, $CaCO_3$, $SiO_2$ and $CaSiO_3$.

6. A temperature sensor comprising a thermistor element according to any one of claims 1-5.

7. A method of producing a thermistor element according to any one of claims 1-5, which comprises mixing said complex perovskite oxide $(MM')O_3$ with said metallic oxide $AO_x$; grinding the mixture to adjust an average particle diameter of the mixture after grinding to an average particle diameter which is not more than that of said metallic oxide before grinding; molding the mixture into an article having a predetermined shape; and sintering the article.

8. A method of producing a thermistor element according to any one of claims 1-5, which comprises mixing a raw material of said M with a raw material of said M' in said complex perovskite oxide $(MM')O_3$; grinding the mixture to adjust an average particle diameter of the mixture after grinding to an average particle diameter which is not more than that of the raw material of said M before mixing and is not more than 0.5 $\mu$m; calcining the ground mixture to obtain said complex perovskite oxide $(MM')O_3$; mixing said $(MM')O_3$ with said metallic oxide $AO_x$; molding the mixture into an article having a predetermined shape; and sintering the article.

9. A method of producing a thermistor element according to any one of claims 1-5, which comprises mixing a raw material of said M with a raw material of said M' in said complex perovskite oxide $(MM')O_3$; grinding the mixture to adjust an average particle diameter of the mixture after grinding to an average particle diameter which is not more than that of a raw material of said M before mixing and is not more than 0.5 $\mu$m; calcining the ground mixture to obtain said complex perovskite oxide $(MM')O_3$; mixing said $(MM')O_3$ with said metallic oxide $AO_x$; grinding the mixture to adjust an average particle diameter of the mixture after grinding to an average particle diameter which is not more than that of said metallic oxide $AO_x$ before mixing; molding the mixture into an article having a predetermined shape; and sintering the article.

**Patentansprüche**

1. Thermistorelement, das einen gemischten gesinterten Körper $(MM')\,O_3 \cdot AO_x$ umfasst, der durch Mischen und Sintern eines komplexen Perovskitoxids $(MM')\,O_3$ und eines metallischen Oxids $AO_x$ erhältlich ist, wobei, wenn a ein molarer Anteil des komplexen Perovskitoxids $(MM')\,O_3$ eines gemischten gesinterten Körpers ist und b ein molarer Anteil des metallischen Oxids $AO_x$ ist, erfüllen a und b die Beziehungen $0 \leq a < 1, 0, 0, 05 < b \leq 0, 95$ und a+b=1, wobei das M in dem komplexen Perovskitoxid $(MM')\,O_3$ zumindest ein Element ist ausgewählt aus Mg, Ca, Sr, Ba, Y, Ce, Pr, Nd, Sm, Eu, Gd, Tb, Dy, Ho, Yb und Sc, und M' zumindest ein Element ist ausgewählt aus Al, Ga, Ti, Zr, Hf, V, Nb, Ta, Cr, Mo, W, Mn, Tc, Re, Fe, Co, Ni, Ru, Rh, Pd, Os, Ir und Pt und wobei ein Metall A in dem metallischen Oxid $AO_x$ zumindest ein Element ist ausgewählt aus B, Mg, Sc, Cr, Mn, Fe, Ni, Zn, Ga, Ge, Sr, Zr, Nb, Sn, Ce, Pr, Nd, Sm, Eu, Gd, Tb, Dy, Ho, Er, Tm, Yb, Lu, Hf und Ta.

2. Thermistorelement nach Anspruch 1, wobei das metallische Oxid $AO_x$ zumindest ein metallisches Oxid ist ausgewählt aus MgO, $Sc_2O_3$, $Cr_2O_3$, MnO, $Mn_2O_3$, $Fe_2O_3$, $Fe_3O_4$, NiO, ZnO, $Ga_2O_3$, $ZrO_2$, $Nb_2O_5$, $SnO_2$, $CeO_2$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, $Lu_2O_3$, $HfO_2$, $Ta_2O_5$ und $MgCrO_4$.

3. Thermistorelement nach Anspruch 1, wobei das metallische Oxid $AO_x$ zumindest ein metallisches Oxid ist ausgewählt aus MgO, $Sc_2O_3$, $ZrO_2$, $Lu_2O_3$, $HfO_2$, $Cr_2O_3$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, $CeO_2$ und $MgCrO_4$.

4. Thermistorelement nach Anspruch 1, wobei das metallische Oxid $AO_x$ zumindest ein metallisches Oxid ist ausgewählt aus MnO, $Mn_2O_3$, $Fe_2O_3$, $Fe_3O_4$, NiO, ZnO, $Ga_2O_3$, $Nb_2O_5$, $SnO_2$, $Ta_2O_5$.

5. Thermistorelement nach einem der Ansprüche 1 - 4, das ferner ein Sinterhilfsmittel umfasst, das aus zumindest einem aus CaO, $CaCo_3$, $SiO_2$ und $CaSiO_3$ aufgebaut ist.

6. Temperatursensor, der ein Thermistorelement nach einem der Ansprüche 1 - 5 umfasst.

7. Verfahren zum Herstellen eines Thermistorelements nach einem der Ansprüche 1 - 5, welches das Mischen des komplexen Perovskitoxids $(MM')O_3$ mit dem metallischen Oxid $AO_x$; das Mahlen der Mischung, um einen durchschnittlichen Teilchendurchmesser der Mischung nach dem Mahlen auf einen durchschnittlichen Teilchendurchmesser einzustellen, welcher nicht mehr ist als der des metallischen Oxids vor dem Mahlen; das Formen der Mischung in einen Artikel mit einer vorbestimmten Form; und das Sintern des Artikels umfasst.

8. Verfahren zum Herstellen eines Thermistorelements nach einem der Ansprüche 1 - 5, welches das Mischen eines Rohmaterials des M mit einem Rohmaterial des M' in dem komplexen Perovskitoxid $(MM')O_3$; das Mahlen der Mischung, um einen durchschnittlichen Teilchendurchmesser der Mischung nach dem Mahlen auf einen durchschnittlichen Teilchendurchmesser einzustellen, welcher nicht mehr ist als der des Rohmaterials des M vor dem Mischen und nicht mehr als 0,5 $\mu$m; das Calcinieren der gemahlenen Mischung, um das komplexe Perovskitoxid $(MM')O_3$ ZU erhalten; das Mischen des $(MM')O_3$ mit dem metallischen Oxid $AO_x$; das Formen der Mischung in einen Artikel mit einer vorbestimmten Form; und das Sintern des Artikels umfasst.

9. Verfahren zum Herstellen eines Thermistorelements nach einem der Ansprüche 1 - 5, welches das Mischen eines Rohmaterials des M mit einem Rohmaterial des M' in dem komplexen Perovskitoxid $(MM')O_3$; das Mahlen der Mischung, um einen durchschnittlichen Teilchendurchmesser der Mischung nach dem Mahlen auf einen durchschnittlichen Teilchendurchmesser einzustellen, welcher nicht mehr ist als der eines Rohmaterials des M vor dem Mischen und nicht mehr als 0,5 $\mu$m; das Calcinieren der gemahlenen Mischung, um das komplexe Perovskitoxid $(MM')O_3$ zu erhalten; das Mischen des $(MM')O_3$ mit dem metallischen Oxid $AO_x$; das Mahlen der Mischung, um einen durchschnittlichen Teilchendurchmesser der Mischung nach dem Mahlen auf einen durchschnittlichen Teilchendurchmesser einzustellen, welcher nicht mehr ist als der des metallischen Oxids $AO_x$ vor dem Mischen; das Formen der Mischung in einen Artikel mit einer vorbestimmten Form; und das Sintern des Artikels umfasst.

## Revendications

1. Elément de thermistance comprenant un corps fritté mixte $(MM')$ $O_3 \cdot AO_x$ pouvant être obtenu par mélange et frittage d'un oxyde de perovskite complexe $(MM')$ $O_3$ et d'un oxyde métallique $AO_x$,
dans lequel, quand a est la fraction molaire dudit oxyde de perovskite complexe $(MM')$ $O_3$ d'un corps fritté mixte et b est la fraction molaire dudit oxyde métallique $AO_x$, a et b satisfont aux relations $0 \le a < 1, 0, 0, 05 < b \le 0, 95$, et $a+b = 1$,
dans lequel ledit M dans ledit oxyde de perovskite complexe $(MM')$ $O_3$ est au moins un élément choisi parmi Mg, Ca, Sr, Ba, Y, Ce, Pr, Nd, Sm, Eu, Gd, Tb, Dy, Ho, Yb et Sc, et M' est au moins un élément choisi parmi Al, Ga, Ti, Zr, Hf, V, Nb, Ta, Cr, Mo, W, Mn, Tc, Re, Fe, Co, Ni, Ru, Rh, Pd, Os, Ir et Pt,
et dans lequel le métal A dans ledit oxyde métallique $AO_x$ est au moins un élément choisi parmi B, Mg, Sc, Cr, Mn, Fe, Ni, Zn, Ga, Ge, Sr, Zr, Nb, Sn, Ce, Pr, Nd, Sm, Eu, Gd, Tb, Dy, Ho, Er, Tm, Yb, Lu, Hf et Ta.

2. Elément de thermistance selon la revendication 1, dans lequel ledit oxyde métallique $AO_x$ est au moins un oxyde métallique choisi parmi MgO, $Sc_2O_3$, $Cr_2O_3$, MnO, $Mn_2O_3$, $Fe_2O_3$, $Fe_3O_4$, NiO, ZnO, $Ga_2O_3$, $ZrO_2$, $Nb_2O_5$, $SnO_2$, $CeO_2$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, $Lu_2O_3$, $HfO_2$, $Ta_2O_5$ et $MgCrO_4$.

3. Elément de thermistance selon la revendication 1, dans lequel ledit oxyde métallique $AO_x$ est au moins un oxyde métallique choisi parmi MgO, $Sc_2O_3$, $ZrO_2$, $Lu_2O_3$, $HfO_2$, $Cr_2O_3$, $Pr_2O_3$, $Nd_2O_3$, $Sm_2O_3$, $Eu_2O_3$, $Gd_2O_3$, $Tb_2O_3$, $Dy_2O_3$, $Ho_2O_3$, $Er_2O_3$, $Tm_2O_3$, $Yb_2O_3$, $CeO_2$ et $MgCrO_4$.

**4.** Elément de thermistance selon la revendication 1, dans lequel ledit oxyde métallique $AO_x$ est au moins un oxyde métallique choisi parmi $MnO$, $Mn_2O_3$, $Fe_2O_3$, $Fe_3O_4$, $NiO$, $ZnO$, $Ga_2O_3$, $Nb_2O_5$, $SnO_2$, $Ta_2O_5$.

**5.** Elément de thermistance selon l'une des revendications 1 à 4, comprenant en outre un auxiliaire de frittage composé d'au moins l'un parmi $CaO$, $CaCO_3$, $SiO_2$ et $CaSiO_3$.

**6.** Capteur de température comprenant un élément de thermistance selon l'une quelconque des revendications 1 à 5.

**7.** Procédé pour produire un élément de thermistance selon l'une quelconque des revendications 1 à 5, qui comprend le mélange dudit oxyde de perovskite complexe $(MM')O_3$ avec ledit oxyde métallique $AO_x$ ; le broyage du mélange pour que la granulométrie moyenne du mélange après broyage soit ajustée à une granulométrie moyenne ne dépassant pas celle dudit oxyde métallique avant broyage ; le moulage du mélange en un article ayant une forme prédéterminée ; et le frittage de l'article.

**8.** Procédé pour produire un élément de thermistance selon l'une quelconque des revendications 1 à 5, qui comprend le mélange d'une matière première dudit M avec une matière première dudit M' dans ledit oxyde de perovskite complexe $(MM')O_3$ ; le broyage du mélange pour que la granulométrie moyenne du mélange après broyage soit ajustée à une granulométrie moyenne ne dépassant pas celle de la matière première dudit M avant mélange et ne dépassant pas $0,5$ $\mu m$ ; la calcination du mélange broyé pour donner ledit oxyde de perovskite complexe $(MM')O_3$ ; le mélange dudit $(MM')O_3$ avec ledit oxyde métallique $AO_x$ ; le moulage du mélange en un article ayant une forme prédéterminée ; et le frittage de l'article.

**9.** Procédé pour produire un élément de thermistance selon l'une quelconque des revendications 1 à 5, qui comprend le mélange d'une matière première dudit M avec une matière première dudit M' dans ledit oxyde de perovskite complexe $(MM')O_3$ ; le broyage du mélange pour que la granulométrie moyenne du mélange après broyage soit ajustée à une granulométrie moyenne ne dépassant pas celle de la matière première dudit M avant mélange et ne dépassant pas $0,5$ $\mu m$ ; la calcination du mélange broyé pour donner ledit oxyde de perovskite complexe $(MM')O_3$ ; le mélange dudit $(MM')O_3$ avec ledit oxyde métallique $AO_x$ ; le broyage du mélange pour que la granulométrie moyenne du mélange après broyage soit ajustée à une granulométrie moyenne ne dépassant pas celle dudit oxyde métallique $AO_x$ avant mélange ; le moulage du mélange en un article ayant une forme prédéterminée ; et le frittage de l'article.

# Fig.1

# Fig.2(a)

# Fig.2(b)

# Fig.3

COMPOUNDING(1)  $Y_2O_3$,  $Cr_2O_3$,  $Mn_2O_3$

MIXING BALL MILL

CALCINATION

$Y(Cr_{0.5}Mn_{0.5})O_3$

COMPOUNDING(2)
$Y(Cr_{0.5}Mn_{0.5})O_3$,  $Dy_2O_3$,
$CaCO_3$,  $SiO_2$

MIXING/GRINDING BALL MILL

GRANULATION/DRYING

MOLDING

SINTERING

THERMISTOR ELEMENT

# Fig.4

COMPOUNDING(1)  $Y_2O_3$ ,  $Cr_2O_3$ ,  $Mn_2O_3$

↓

MIXING BALL MILL

↓

CALCINATION

↓

$Y(Cr_{0.5}Mn_{0.5})O_3$

↓

COMPOUNDING(2)
$Y(Cr_{0.5}Mn_{0.5})O_3$ ,  $Dy_2O_3$ ,
$CaCO_3$ ,  $SiO_2$

↓

MIXING/GRINDING
MEDIUM STIRRING MILL

↓

GRANULATION/DRYING

↓

MOLDING

↓

SINTERING

↓

THERMISTOR ELEMENT

# Fig.5

```
┌─────────────────────────────────────────────┐
│  COMPOUNDING(1)  Y₂O₃,  Cr₂O₃,  Mn₂O₃        │
└─────────────────────────────────────────────┘
                      │
                      ▼
        ┌─────────────────────────────┐
        │      MIXING MEDIUM          │
        │      STIRRING MILL          │
        └─────────────────────────────┘
                      │
                      ▼
        ┌─────────────────────────────┐
        │        CALCINATION          │
        └─────────────────────────────┘
                      │
                      ▼
        ┌─────────────────────────────┐
        │     Y(Cr₀.₅Mn₀.₅)O₃         │
        └─────────────────────────────┘
                      │
                      ▼
   ┌───────────────────────────────────────┐
   │   COMPOUNDING(2)                      │
   │        Y(Cr₀.₅Mn₀.₅)O₃,  Dy₂O₃,       │
   │        CaCO₃,  SiO₂                    │
   └───────────────────────────────────────┘
                      │
                      ▼
   ┌───────────────────────────────────────┐
   │      MIXING/GRINDING                  │
   │      MEDIUM STIRRING MILL             │
   └───────────────────────────────────────┘
                      │
                      ▼
        ┌─────────────────────────────┐
        │   GRANULATION/DRYING        │
        └─────────────────────────────┘
                      │
                      ▼
        ┌─────────────────────────────┐
        │         MOLDING             │
        └─────────────────────────────┘
                      │
                      ▼
        ┌─────────────────────────────┐
        │        SINTERING            │
        └─────────────────────────────┘
                      │
                      ▼
   ┌───────────────────────────────────────┐
   │      THERMISTOR ELEMENT               │
   └───────────────────────────────────────┘
```

Compounding(1): $Y_2O_3$, $Cr_2O_3$, $Mn_2O_3$

$Y(Cr_{0.5}Mn_{0.5})O_3$

Compounding(2): $Y(Cr_{0.5}Mn_{0.5})O_3$, $Dy_2O_3$, $CaCO_3$, $SiO_2$

# Fig.6

COMPOUNDING(1) $Y_2O_3$, $Cr_2O_3$, $Mn_2O_3$

↓

MIXING MEDIUM
STIRRING MILL

↓

CALCINATION

↓

$Y(Cr_{0.5}Mn_{0.5})O_3$

↓

COMPOUNDING(2)
$Y(Cr_{0.5}Mn_{0.5})O_3$, $Dy_2O_3$,
$CaCO_3$, $SiO_2$

↓

MIXING/GRINDING BALL MILL

↓

GRANULATION/DRYING

↓

MOLDING

↓

SINTERING

↓

THERMISTOR ELEMENT

# Fig.7

COMPOUNDING(1)  $Y_2O_3$,  $Cr_2O_3$,  $Mn_2O_3$

↓

MIXING MEDIUM
STIRRING MILL

↓

CALCINATION

↓

$Y(Cr_{0.5}Mn_{0.5})O_3$

↓

COMPOUNDING(2)
$Y(Cr_{0.5}Mn_{0.5})O_3$, AOx,
$CaCO_3$, $SiO_2$

↓

MIXING/GRINDING
MEDIUM STIRRING MILL

↓

GRANULATION/DRYING

↓

MOLDING

↓

SINTERING

↓

THERMISTOR ELEMENT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7201528 A
- EP 0798275 A

- EP 0655752 A